# EUROPEAN PATENT SPECIFICATION

(11) **EP 1 153 508 B1**
(45) Date of publication and mention of the grant of the patent: **19.05.2004**
(21) Application number: 00906014.6
(22) Date of filing: 08.02.2000
(51) Int. Cl.: H04N 5/445

(54) **ELECTRONIC PROGRAM GUIDE WITH SUPPORT FOR RICH PROGRAM CONTENT**
ELEKTRONISCHER PROGRAMMFÜHRER MIT UNTERSTÜTZUNG UMFASSENDER PROGRAMMINHALTE
GUIDE DE PROGRAMMES ELECTRONIQUE AVEC PRISE EN CHARGE DE CONTENU DE PROGRAMMES RICHE

(30) Priority: 08.02.1999 US 118987 P
(43) Date of publication of application: 14.11.2001
(73) Proprietor: United Video Properties, Inc., Tulsa, OK 74136 (US)
(72) Inventor: HASSELL, Joel, G., Arvada, CO 80005 (US); THOMAS, William, L., Bixby, OK 74008 (US); ELLIS, Michael, D., Boulder, CO 80304 (US)
(74) Representative: Hale, Peter
(86) International application number: PCT/US2000/003262
(87) International publication number: WO 2000/046988

(56) References cited:
- EP-A- 0 725 539
- EP-A- 0 737 007
- EP-A- 0 798 921
- EP-A- 0 811 940
- WO-A-97/47135
- WO-A-99/04560
- WO-A-99/04561
- WO-A-99/35831
- US-A- 5 331 349
- US-A- 5 754 253
- US-A- 5 822 123

## Description

### Background of the Invention

This invention relates to interactive television program guide systems. More particularly, this invention relates to interactive television program guide systems for rich program content made available by digital television technology.

Digital television allows for a high quantity of programming to be available to home viewers. This programming transcends the traditional content boundaries by making available not only prescheduled video programming, but many other types of content. This other content includes music services, special event feeds, electronic commerce, Internet capabilities, stock and news feeds, and an almost limitless amount of information.

Conventional interactive television program guides simply list programming information and may provide features that allow a user to navigate between limited, and sometimes fixed content. A need presents itself to assist the user in navigating through the nearly endless content offered by digital television. The availability of a vast amount of content allows the user to become better informed about particular matters. Conventional television program guides do not focus on presenting an all-encompassed array of content to the user. The reason for this is probably because analog television is limited in the amount of content offered and because of the static nature of the programming offered by analog television. These characteristics of analog television make the conventional television program guide adequate to serve the purpose of informing the user simply by making the user aware of the existence of content and not providing significant capabilities for organizing the actual information being broadcast. Digital television, however, demands a tool that will not only inform the user of the existence of content, but will present the content in a clear and efficient manner.

This becomes more important as new types of digital television content become available. Different types of content that relate to one another, and multiple feeds of similar content may be available. A conventional television program guide may only provide a listing of these related items, and may not allow the user to view all of the related content simultaneously.

From WO-A-9 904 560 an interactive GUI display of a channel list in a digital broadcast environment is known.

US-A-5,331,349, EP-A-0 737 007 and US-A-5,754,253 show using a picture-out-picture (POP) to display passive television content.

It is therefore an object of the present invention to provide a way in which the vast amount of content offered by digital television may be organized and made navigable for a user. It is also an object of the present invention to provide digital television rich content program guides that allow a user to view or have immediate access to all available related content.

### Summary of the Invention

These and other objects of the invention are accomplished in accordance with the principles of the present invention by providing systems and methods that may present the rich content made available by digital television technology in a more customizable and efficient way, including the use of interactive features.

In the case where an analog carrier carries a number of digital television feeds, the interactive rich content television program guide as described by the present invention may provide a listing that describes the digital television feeds made available by the analog carrier. The user may select any of the available digital television feeds to be displayed on the display.

The digital television feeds, themselves, may contain many different types of programming. For example, this may include video, audio, data, interactive content, enhanced broadcasts, etc.

One of the most beneficial aspects of digital television technology is that multiple digital television feeds may be provided by a particular analog carrier and that the content provided by these digital television feeds may all be related to a single subject. If desired, the content of a majority of the digital television feeds may be related to a single subject, or no relationship need exist between the content provided by the digital television feeds if so desired. For example, an analog carrier may carry digital television feeds that are all related to business news. There may be video feeds that carry live video news updates or any other suitable content, a configurable stock ticker may be provided by a digital television feed (i.e. the digital television feed may simply be a stream of data that has stock quotes for all of the exchanges, and the present invention may be used to pull data from this stream that corresponds to what the user wishes to view), text and graphic update feeds may be provided that may chart the progress of the stock market, and advertisement feeds may provide any suitable form of advertisements. These are only a few examples of the types of related content that may be provided. Any other suitable arrangement may be used.

The present invention includes the use of black areas. Black areas are typically the black spaces that appear on either the top and bottom of a display screen, or on the left and right of a display screen, when, for example, a wide-screen program is being viewed on a standard aspect television or when a standard aspect program is viewed on a wide-screen television, respectively. The program guide of the present invention attempts to make use of the black areas, which are defined by the present invention as any visible empty space between content displayed on the display screen. Content may be moved, placed, and resized within the black areas. This allows for additional content to be placed in the display screen. This also allows for more freedom in content arrangement in the display screen.

In order to take advantage of the numerous related digital television feeds, it is worthwhile to be able to view the information that is provided by several digital television feeds simultaneously. To this end, the present invention provides a rich content television program guide that allows multiple feeds to be displayed simultaneously. This may be accomplished, for example, through the use of black areas, which may hold additional content in accordance with the extended definition of black areas as hereinbefore stated.

A way in which the content may be displayed is through the use of windows. That is, each digital television feed may be assigned a window that may be placed in the viewable area of the user's display screen. This window may be moved and resized by the user, or the window may be automatically moved and resized by the rich content television program guide based on user preference settings or based on any other suitable factors.

With the large number of options and preference settings that may be available with a rich content television program guide, the present program guide attempts to make the user's preferences and other personal data easier to maintain through the use of heuristic features. These features may allow the program guide to learn the likes and dislikes of each particular user and may automatically store settings so that the user need not by burdened with manually changing user settings and other personal data. These setting may have to do with anything ranging from which background colors to use to which credit card number to use for purchases made through the interactive television commerce features made available by enhanced broadcast television. If desired, the user may also be given the option to manually override the automated system and store settings manually.

If desired, the features of the present invention may be used independently from a rich content television program guide. For clarity, the present invention is described with the assumption that the features will be used as part of a rich content television program guide.

Further features of the invention, its nature, and various advantages will be more apparent from the accompanying drawings and the following detailed description of the preferred embodiments.

### Brief Description of the Drawings

FIG. 1 is a block diagram of an illustrative program guide system in accordance with the present invention.
FIG. 2 is a diagram showing digital channel feeds being incorporated into analog carriers in accordance with the present invention.
FIG. 3 is a diagram of a stream of packets making up a digital stream in accordance with the present invention.
FIG. 4 is a block diagram showing a packet filter breaking up a packet stream into digital feeds in accordance with the present invention.
FIG. 5 is a block diagram showing a digital video feed being filtered and processed in accordance with the present invention.
FIG. 6 shows an illustrative rich content program guide display screen in accordance with the present invention.
FIG. 7 shows an illustrative rich content program guide display screen in accordance with the present invention.
FIG. 8 shows an illustrative rich content program guide display screen in accordance with the present invention.
FIG. 9 shows an illustrative rich content program guide display screen in accordance with the present invention.
FIG. 10 is a flow chart of illustrative steps involved in deciding how to format the display in accordance with the present invention.
FIG. 11A shows an illustrative rich content program guide display screen in accordance with the present invention.
FIG. 11B shows an illustrative rich content program guide display screen in accordance with the present invention.
FIG. 12A shows an illustrative rich content program guide display screen in accordance with the present invention.
FIG. 12B shows an illustrative rich content program guide display screen in accordance with the present invention.
FIG. 13 shows an illustrative rich content program guide window in accordance with the present invention.
FIG. 14 shows an illustrative rich content program guide window in accordance with the present invention.
FIG. 15 shows an illustrative rich content program guide window in accordance with the present invention.
FIG. 16 shows an illustrative rich content program guide window in accordance with the present invention.
FIG. 17A shows an illustrative rich content program guide display screen in accordance with the present invention.
FIG. 17B shows the illustrative rich content program guide display screen of FIG. 17A after the user moved the windows and resized the windows in accordance with the present invention.
FIG. 18A shows an illustrative rich content program guide cascade window structure in accordance with the present invention.
FIG. 18B shows the illustrative rich content program guide window of FIG. 18A after the user selected the highlighted window in accordance with the present invention.
FIG. 19 shows an illustrative rich content program guide window in accordance with the present invention.
FIG. 20 shows an illustrative rich content program guide display screen in accordance with the present invention.
FIG. 21A shows an illustrative rich content program guide window in accordance with the present invention.
FIG. 21B shows the illustrative rich content program guide window of FIG. 21A after a specified period of time passes in accordance with the present invention.
FIG. 22A shows an illustrative rich content program guide window in accordance with the present invention.
FIG. 22B shows the illustrative rich content program guide window of FIG. 22A after the user performed a toggle command in accordance with the present invention.
FIG. 22C shows the illustrative rich content program guide window of FIG. 22B after the user performed a toggle command in accordance with the present invention.
FIG. 22D shows the illustrative rich content program guide window of FIG. 22A after the user performed a toggle command N-1 times in accordance with the present invention.
FIG. 22E shows the illustrative rich content program guide window of FIG. 22D after the user performed a toggle command in accordance with the present invention.
FIG. 23 is a flow chart of illustrative steps involved in changing the content of a display window in accordance with the present invention.
FIG. 24 is a diagram showing multiple analog feeds being displayed simultaneously in accordance with the present invention.
FIG. 25 shows an illustrative rich content program guide window in accordance with the present invention.
FIG. 26 is a flow chart of illustrative steps involved in purchasing a compact disc in accordance with the present invention.
FIG. 27A shows an illustrative rich content program guide window in accordance with the present invention.
FIG. 27B shows the illustrative rich content program guide window of FIG. 27A after the user made a selection in accordance with the present invention.
FIG. 28 is a flow chart of illustrative steps involved purchasing concert tickets in accordance with the present invention.
FIG. 29 is a flow chart of illustrative steps involved in creating a digital music video feed on the fly in accordance with the present invention.
FIG. 30 shows an illustrative rich content program guide display screen in accordance with the present invention.
FIG. 31 shows an illustrative rich content program guide window in accordance with the present invention.
FIG. 32 shows an illustrative rich content program guide display screen in accordance with the present invention.
FIG. 33A shows an illustrative ticker window in accordance with the present invention.
FIG. 33B shows the illustrative ticker window of FIG. 33A after a period of time has elapsed in accordance with the present invention.
FIG. 34A shows an illustrative ticker window in accordance with the present invention.
FIG. 34B shows the illustrative ticker window of FIG. 34A after a period of time has elapsed in accordance with the present invention.
FIG. 35A shows an illustrative ticker window in accordance with the present invention.
FIG. 35B shows an illustrative selection window that is displayed upon selection of an item from the ticker of FIG. 35A in accordance with the present invention.
FIG. 36 shows an illustrative rich content program guide display screen in accordance with the present invention.
FIG. 37 shows an illustrative rich content program guide display screen in accordance with the present invention.
FIG. 38 shows an illustrative rich content program guide display screen in accordance with the present invention.
FIG. 39A shows an illustrative rich content program guide window in accordance with the present invention.
FIG. 39B shows the illustrative rich content program guide window of FIG. 37A after it has been automatically resized in accordance with the present invention.
FIG. 40A shows an illustrative rich content program guide window in accordance with the present invention.
FIG. 40B shows the illustrative rich content program guide window of FIG. 38A after it has been resized.
FIG. 40C shows the illustrative rich content program guide window of FIG. 38A after it has been resized.
FIG. 41 shows an illustrative rich content program guide display screen in accordance with the present invention.
FIG. 42 is a block diagram illustrating a possible cropping technique in accordance with the present invention.
FIG. 43 is a flow chart of illustrative steps involved in activating an application from within a content program guide in accordance with the present invention.
FIG. 44 shows an illustrative rich content program guide display screen in accordance with the present invention.
FIG. 45 shows an illustrative rich content program guide display screen in accordance with the present invention.

### Detailed Description of the Preferred Embodiments

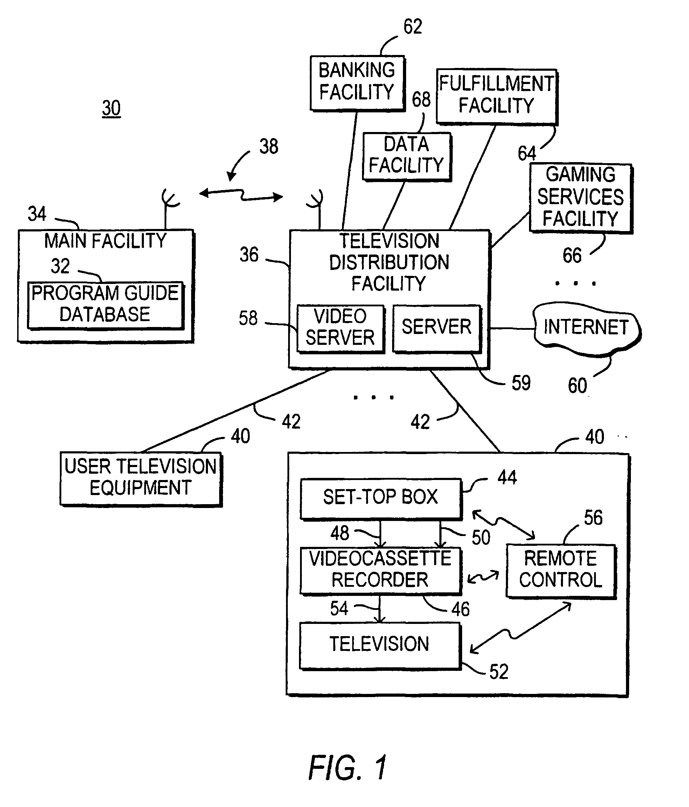

An illustrative program guide system 30 in accordance with the present invention is shown in FIG. 1. Program guide data such as program listings, program descriptions, pay-per-view ordering information and the like may be stored in program guide database 32 of main facility 34. Main facility 34 may distribute the program guide data to multiple television distribution facilities 36 via communications paths such as communications path 38. Television distribution facilities 36 may be broadcast television facilities, cable system headends, satellite distribution facilities, or other suitable television distribution facilities. Only one television distribution facility 36 is illustrated in FIG. 1 to avoid over-complicating the drawings. For clarity, the invention will be primarily discussed in connection with the use of one such television distribution facility. Communications path 38 may be any suitable communications path, such as a satellite link, cable, fiber-optic link, telephone link, the Internet, etc.

Each television distribution facility 36 has a number of associated users each of which has user television equipment 40 connected to television distribution facility 36 via one of communications paths 42. Communications paths 42 may be any suitable type of link suitable for supporting television programming and data. For example, if television distribution facility 36 is a cable system, communications paths 42 may be cable. Paths 42 are used to distribute television programming to user television equipment 40. The television signals distributed to user television equipment 40 may be analog or digital or both. Paths 42 are also used to distribute data such as program guide data to user television equipment 40. Data may be distributed using an in-band or out-of-band technique and may use digital or analog techniques. Data may be distributed continuously, periodically, or on-demand. Paths 42 are preferably bidirectional, so that functions such as impulse pay-per-view purchases from the program guide and client-server functions may be supported. When services other than program guide services are provided to the user, data may be provided over paths 42 that relates to such non-program-guide services.

As shown in FIG. 1, user television equipment 40 may contain a set-top box 44 connected to an optional videocassette recorder 46 or other recording device such as a digital video disc (DVD) player with recording capabilities or a digital storage device such as equipment containing a hard disk drive or the like. If desired, set-top box 44 may be a digital video recorder or personal video recorder that includes such a hard disk drive. Set-top box 44 may receive television programming and data from television distribution facility 36 via communications path 42. An interactive television program guide and various non-program-guide applications may be implemented on set-top box 44.

Television programming from television distribution facility 36 and display screens generated by the applications on set-top box 44 may be provided to videocassette recorder 46 using communications path 48, which may be, for example, a cable or wire. Commands may be provided to videocassette recorder 46 from set-top box 44 using communications path 50, which may be an infrared link or other suitable communications path.

Videocassette recorder 48 may pass television programming from television distribution facility 36, display screens generated by set-top box 44, or video signals generated by playing a videocassette to television 52 via communications path 54. The user may view television programming and display screens on television 52 and may use television 52 (or an auxiliary audio system) to listen to music channels or other audio programs.

Set-top box 44, videocassette recorder 46, and television 52 may be controlled by remote control 56 or any other suitable user interface such as a mouse, trackball, wireless keyboard, voice recognition system, touchpad, dedicated keys, etc. If desired, other types of user television equipment 40, such as those based on personal computer televisions (PC/TVS) or advanced television receivers may be used instead of a configuration based on a set-top box. However, for clarity the present invention will be described primarily in connection with a set-top box arrangement. Moreover, different configurations may be used for distributing data to user television equipment 40 such as configurations in which program listings and other information may be distributed to user television equipment 40 without passing through television distribution facility 36 using paths (e.g. Internet paths) that are separate from communications paths 42. For clarity, the present invention will be described primarily in connection with the illustrative data distribution arrangement shown in FIG. 1.

Television distribution facility 36 may contain a video server 58 to support video-on-demand applications. With such applications, videos that are stored on video server 58 may be requested by users at user television equipment 40. The videos may then be played back to the users over communications paths 42. A server 59 that is separate from or integrated with server 58 may also be provided if it is desired to implement applications such as the program guide application using a client-server architecture.

Applications such as program guide applications and non-program-guide applications may be implemented on any suitable platform. One suitable platform is user television equipment 40, which may be based on a set-top box or a device that incorporates set-top box functions such as an advanced digital television receiver, etc. Another suitable platform involves a client-server architecture based on a server 59 and user television equipment 40. Server 59 may be located at television distribution facility 36 or at another location remote from user television equipment 40. Server 59 operates in cooperation with user television equipment 40. In client-server arrangements, program guide data may be maintained in a database on server 59 and may be delivered to user television equipment 40 on demand. The program guide data maintained at server 59 may be distributed to server 59 for its database from program guide database 32 via communications link 38.

With client-server arrangements, interactive program guides and other applications that are implemented on the platform are partially implemented on user television equipment 40 and are partially implemented on server 59, rather than being implemented entirely on user television equipment 40. For example, program guide functions related to displaying menu screens may be implemented at user television equipment 40, whereas functions related to maintaining a program guide database at television distribution facility 36 may be implemented using server 59 and functions related to video-on-demand features may be implemented using server 58.

Web browser applications on set-top box 44 may allow the user to access the Internet 60. The Internet 60 may be either accessed directly (e.g., via a modem link) or via television distribution facility 36 (using, e.g., a cable modem link), as shown in FIG. 1. Other facilities and services that may be accessed directly or via television distribution facility 36 include banking services (using banking facility 62), shopping services (using fulfillment facility 64), wagering or gaming services (using gaming facility 66), and information and other services (using data facility 68) .

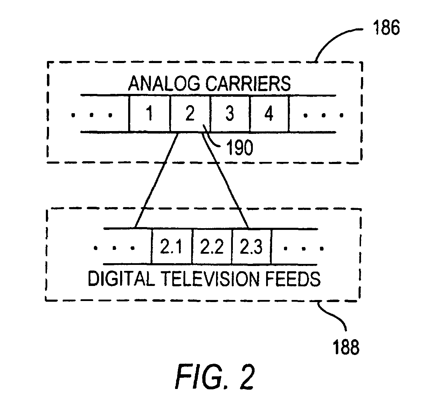

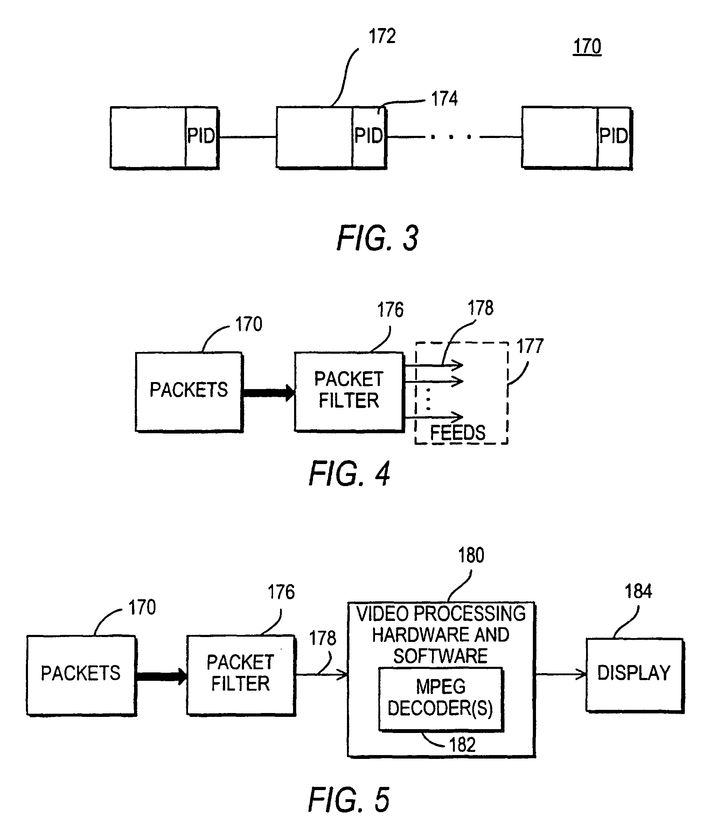

Digital television allows for a conventional analog carrier to carry multiple digital channels as illustrated in FIG 2. Analog carriers such as channel 190 may each carry a set of one or more digital channels 188 in its broadcast signal. The digital channels may be broadcast in the form of a stream of packets 170 as shown in FIG. 3. A packet 172 may contain a packet identifier (PID) 174 that may identify the digital stream or streams with which the packet is associated. Packets of data may be streamed through communication channels such as a cable connection, a satellite feed, telephone wires, or any other suitable broadcast method. The packets of data may then be processed by hardware and software resident in a set-top box. This is merely an illustrative way to broadcast digital channels. If desired, digital data may be sent via a contiguous block of data that may be stored in the user's set-top box. This data may be updated on a regular basis, on a continuous basis, or on an on-demand basis. If desired, any systems and methods for transferring digital channel data may be used in accordance with the present invention.

One of the benefits of digital television is that a multitude of digital channels 188 may be transmitted along one analog carrier 190. This allows a broadcaster of an analog carrier 190 who uses digital technology to broadcast more content without adding bandwidth. The data for all of these digital channels 188 may be interspersed in the stream of packets 170. Each packet 172 may contain data for a particular digital feed. The PID 174 may identify which feed the packet data belongs to. If desired, a packet header may provide information such as a location parameter that may define where this portion of data belongs relative to the other portions of data that make up that particular feed. Alternatively, a packet 172 may have data from different digital feeds 188 interspersed within itself. In that case, the packet header may provide offset information, length information, location information, and feed identification information for each contiguous segment of data in packet 172 pertaining to a particular feed. The offset information and the length information may pinpoint the segment of packet data being referenced and the location and feed identification may define where this portion of data belongs relative to the other portions of data that make up the particular feed being identified.

A filtering operation that may separate each digital feed from the packet data stream is illustrated in FIG. 4. The stream of packets 170 may be sent through a packet filter 176 that may read the PID 174 of each packet 172 and may determine which feed 178 each particular piece of data belongs to. Packet filter 176 may then output separate digital feeds 177 that may be in the form of individual streams of data, files, packets of data, or any other suitable form of data. This data may then be used by the various hardware and software of the set-top box in conjunction with interaction with a head-end (to facilitate more interactivity).

For example, the flow of digital data into a video display is illustrated in FIG 5. One of the feeds 178 that is outputted by the packet filter 176 may be sent into video processing hardware and video processing software 180 that may include an MPEG decoder. If desired, more than one digital video stream may be displayed simultaneously by increasing the number of MPEG decoders 182. If desired, a digital video stream may be simultaneously displayed with one or more analog video broadcasts by using a separate tuner for every analog carrier. The formatted and decoded video data is then transmitted from the video processing hardware and software 180 to the display device 184.

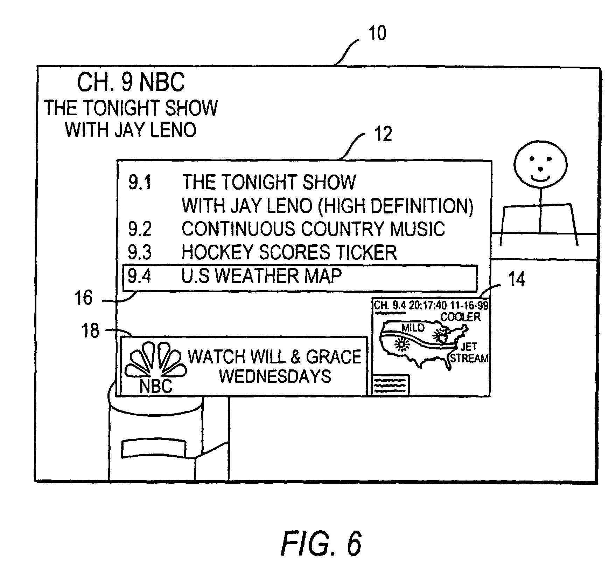

FIG. 6 is an illustration of a display screen 10 that shows a main video feed in the full screen and a listings overlay 12 that contains listings of digital feeds being transmitted along the analog signal carrying NBC's broadcast programming. The listings overlay may have been displayed as a result of the user pressing a menu button on the remote. The listings in listings overlay 12 may be selected by the user using arrow keys on the remote control. If desired, a preview window 14 may be provided in the listings overlay 12. Alternatively, a preview window 14 may be provided in any other suitable location that can display a preview image, textual description, or video of the channel that is currently highlighted by highlight region 16 in listings overlay 12. In addition, an advertisement region 18 containing a graphical or textual advertisement that may be interactive may be displayed in listings overlay 12.

Listings overlay 12 is merely illustrative of a technique for presenting program listings. Any suitable technique for displaying program listings may be implemented. If desired, such a choice may be left to the user to make in a set-up operation for the set-top box or other user equipment capable of implementing such features. Program listings may be permanently visible on the display, may disappear after a predetermined period of time, may be activated and deactivated by the user, or may be activated and deactivated based on any other suitable mechanism.

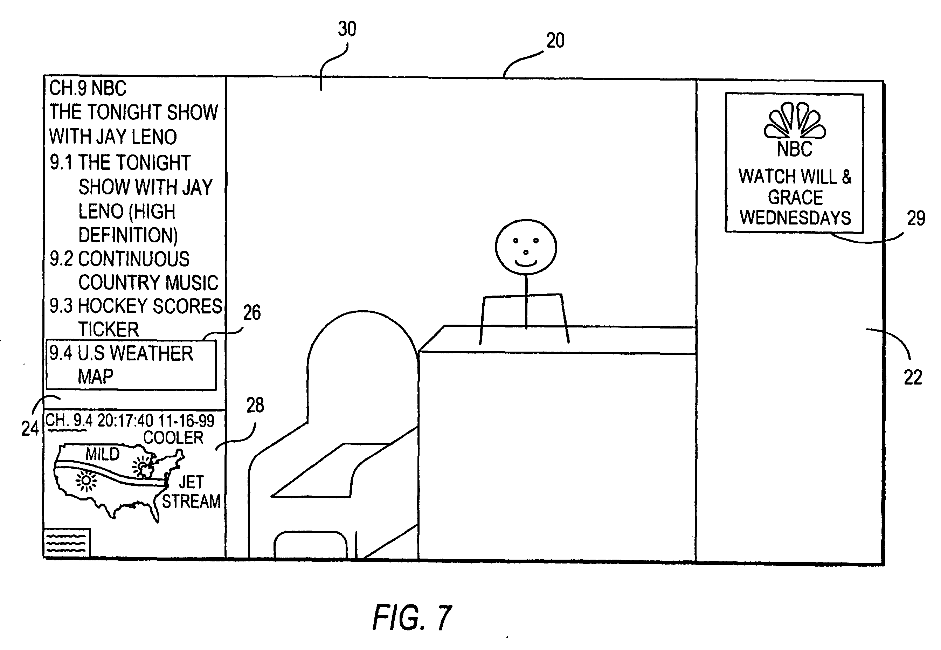

Another illustrative way in which to present program listings is shown in FIG. 7. FIG. 7 is an illustration of a display screen 20 that is displayed on a wide-screen display device. The program being shown on the illustrated channel is being broadcast in a standard-screen size. The set-top box may be enabled to determine the size of the display device and may be enabled to determine the size of the broadcast of any particular channel or feed. If, as FIG. 7 illustrates, the two sizes do not match, then "black areas" can be seen. In the case when a wide-screen display device attempts to display a standard-screen display, the result may be a black area 24 on the left side of the display device 20 and a black area 28 on the right side of the display device 20.

These black areas may be used to display additional information to the user without having to obstruct the view of the main feed. For example, a listing of other feeds associated with the current analog carrier may be displayed in a black area. This avoids having to overlay the listings over the program currently being viewed as illustrated in FIG. 6. Such listings may have all the functionality of listings that are displayed in a separate window (e.g. they may be interactive). The possible combinations of features that may be implemented in the black areas are almost limitless. A preview pane 28 may be displayed that may provide a preview image, textual information, or video of a currently highlighted item in the program listings. An advertisement region 28 may display advertisements in the black areas.

If desired, the use of black areas may be disabled by the user. Furthermore, the user may elect to "stretch" the standard-screen main feed so as to make it fit into the wide-screen display screen 20.

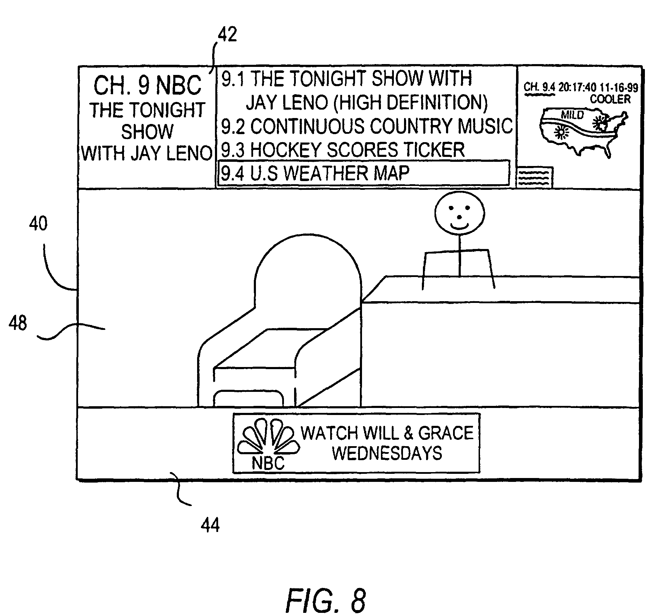

In the case where a wide-screen broadcast is being displayed on a standard-screen display 40, as illustrated in FIG. 8, a black area 42 may be present at the top of the display 40 and a black area 44 may be present at the bottom of the display 40. The content of these black areas may be similar to those in FIG. 7. If desired the sides of the broadcast feed may be cut, and the top and the bottom stretched to fit the display screen 40, eliminating the black areas.

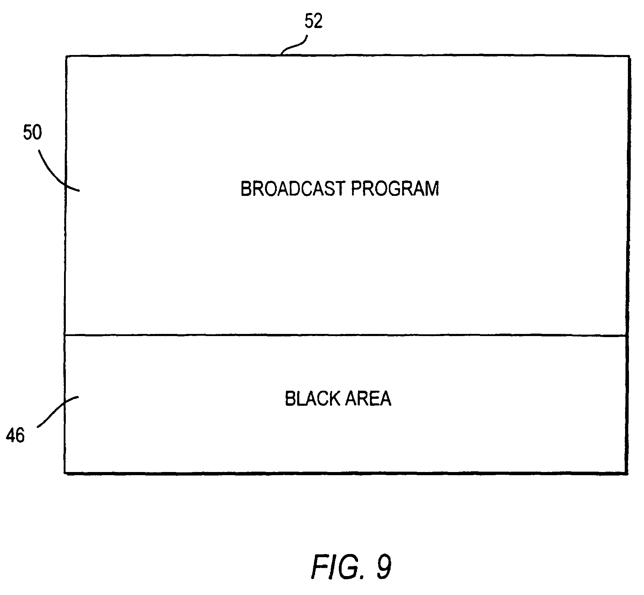

Another feature of the rich content television program guide described by the present invention may allow a user to move the video window 48 of the display screen 40 so as to cover any amount of the black area above or below it. For example, if the user moves video window 48 up, so that it completely covers black area 42, the result may be a display that looks like screen 52 of FIG. 9. Here the black area 46 is twice as high as the black area 44 of FIG. 4. This may allow for larger images and a more comprehensive content listing to be displayed in black area 46.

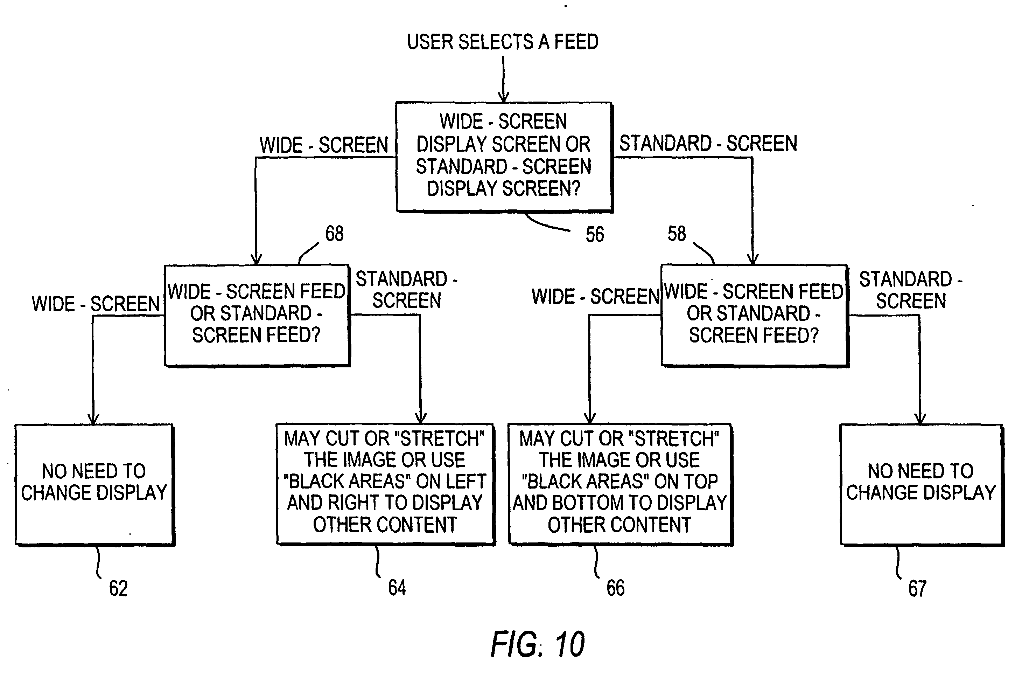

FIG. 10 is a flow chart that presents an illustrative process of determining how to manage black areas. As the user tunes to a particular feed, the set-top box, at step 56, may determine whether the user is viewing a wide-screen display screen or a standard screen display screen. If the user is viewing a wide-screen display screen, and if the particular feed is formatted for a wide-screen display (as determined at step 68) nothing needs to be done to manage black areas since no black areas will exist as noted by step 62. If, however, at step 68 it is determined that the particular program is formatted for a standard-screen, then at step 64 the image provided by the broadcast feed may be stretched to fit the display screen, or the image may be cut to fit the display screen, or black areas may become available for displaying other content.

If, at step 56, it was determined that the display device is a standard-screen, and if it is determined that the particular broadcast feed is formatted for a wide-screen display at step 58, the broadcast feed may be cut so that it fits in the display screen at step 66. Alternatively, at step 66, it may be chosen to leave the black areas and use them for displaying other content, or the image provided by the broadcast feed may be stretched to fit the display screen. If it is determined at step 58 that the broadcast feed is formatted for a standard-screen display, then nothing needs to be done since there will be no black areas.

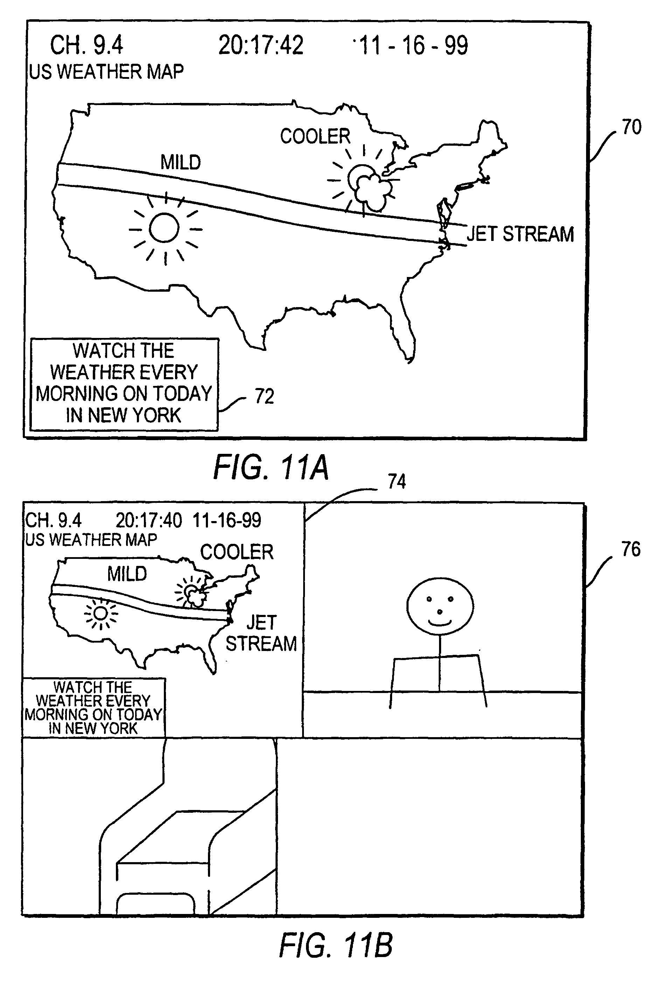

The rich content television program guide described by the present invention may allow a user to select content from content listings such as content listings overlay 12 of FIG. 6. If the highlighted region 16 is selected, using, for example, arrow keys on the remote control to scroll through the listings and perhaps using an enter key on the remote control to select the particular listing, a display such as display 70 of FIG. 11A may be displayed. Display screen 70 contains the feed selected from highlighted content listing 16. The system may automatically select an advertisement feed that is transmitted by the analog carrier and have advertisements from this feed displayed in an advertisement region 72 simultaneously with the user-selected feed. The user preferably does not have any control over whether an advertisement is displayed or not, but a user may be given the control to determine whether advertisement feeds are to be displayed, if desired.

FIG. 11B illustrates an alternate embodiment of a display screen that may result from selecting the highlighted content listing 16 of FIG. 6. In this embodiment, an additional feed is displayed as an overlay 74 over the original feed that was being displayed. This arrangement of displaying multiple feeds is merely illustrative. Any other suitable arrangement may be used as desired.

One of the most beneficial features of digital television is the ability for a broadcast provider to broadcast related digital television feeds. This feature may be used to provide a user with additional information and resources about particular interests, issues, events, etc. An important feature of the rich content television program guide as described by the present invention is the ability to organize the content of such additional information so as to make it simple for a user to access and be aware of any available resources.

For example, a provider of business-related information may broadcast an analog carrier that may have as its main feed a financial news video feed. The provider may simultaneously transmit several other digital channels on the analog carrier. These additional feeds may include, for example, another video feed, ten text/graphic updates, and a configurable stock ticker.

When a user tunes to a particular analog carrier that consists of several digital feeds, the set-top box may provide a default arrangement of content that may be simultaneously displayed to the user. This arrangement may be an arrangement both in terms of content of windows and visual layout of windows on the user's display screen. This default may be a default set by the broadcast provider, it may be a user-defined default, it may be a default based on a set-top box's artificial intelligence mechanism that learns a particular user's tastes with respect to the content being viewed, or it may be any combination of these or other suitable mechanisms.

Defaults based on a particular user's preferences may be stored in a user profile that is unique to each user of a particular set-top box (e.g. each member of a household). Each user may log in to activate his respective settings and preferences.

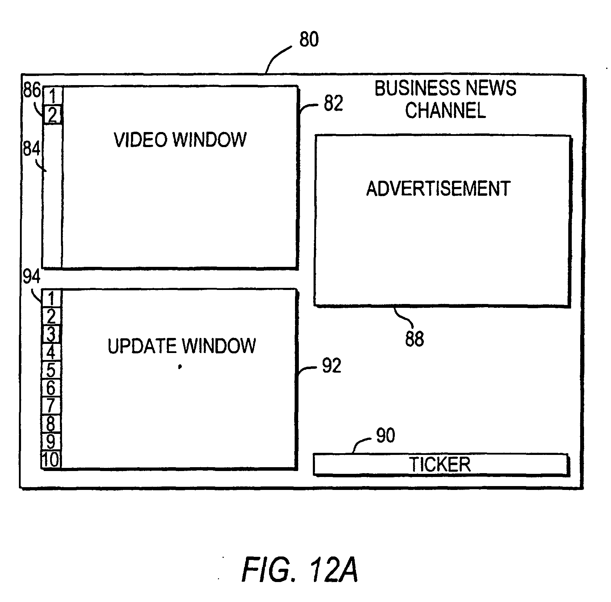

FIG. 12A is an illustration of a typical default layout of a business channel. There may be a video window 82 that may display a default video upon activation of the business channel. There may also be a text/graphic update window 92 that may display a default text/graphic update upon activation of the business channel. There may be a configurable stock ticker 90 that may display a default set of stock price quotes upon activation of the business channel. There may also be an advertisement region 88 that may be automatically selected and which may be beyond the user's control. If desired a limited amount of control over the advertisement region 88 may be granted to the user.

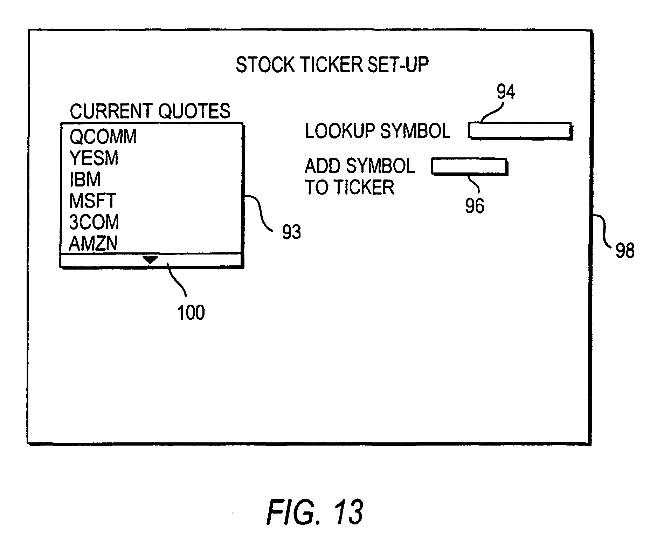

The configurable stock ticker 90 may be selected by the user by using arrow keys on the remote control or by placing a cursor over stock ticker 90 using a wireless mouse, trackball, or any other suitable input device and then clicking a button or pressing an enter key. This may bring up a setup screen such as that illustrated in FIG. 13. The user may choose stocks to add to stock ticker 90 by entering stock symbols in text box 96. Characters may be entered via a wireless keyboard, a telephone-like keypad on a remote control, or by scrolling through an alphabet that may be displayed in screen 98 or that may be displayed as a separate overlay. The user may view the stock symbols currently configured for the ticker in window 93. If desired, additional features may be provided. This may include features such as a feature that looks up a stock symbol for a company name. A user may enter a company's full or partial name in textbox 96, and may press an enter key on the remote control to have the system look up the symbol for the company name and perhaps provide a query of whether to add the symbol to the ticker. This is just one possible embodiment for the set-up screen of a ticker. Any other arrangement for setting up a ticker may be used if desired. In addition, a ticker may be used for any purpose -- not just displaying stock prices.

The current quotes window 93 contains a scroll bar 100 that indicates the existence of additional elements in the listing that are not being displayed. The user may use a mouse cursor to click on scroll bar 100 to scroll down the listings. Alternatively, the user may use the up and down arrow keys on the remote control to automatically scroll after the last displayed element is highlighted. The embodiment demonstrated is purely illustrative. Any such embodiment of scrolling and displaying a scroll bar may be implemented.

FIG. 12A illustrates the use of windows for displaying video content, text content, graphics content, etc. This may be accomplished by treating a display screen with no windows as a large black area. As windows are added, the black areas become defined as the unused portions of the display screen surrounding the windows. If desired, these black areas may be used to display any suitable content without the use of windows. For example, a program listing may be displayed in a black area adjacent to a video window that may inform the user of scheduled programming for the feed currently viewable in that video window. This is a merely illustrative use of the black areas in conjunction with windows. Any other suitable uses of the black areas may be implemented.

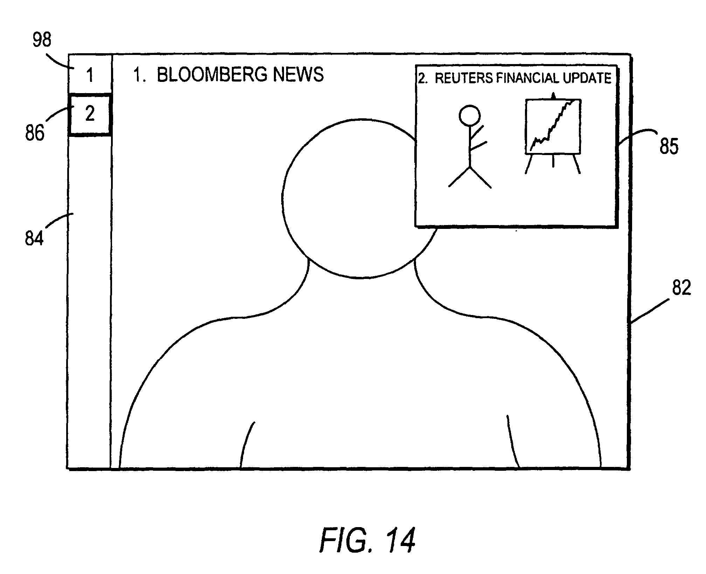

The display screen 80 of FIG. 12A contains a video window 82. When an analog carrier carries more than one video feed, one video may be displayed in video window 82 at a time. If desired, multiple video windows may be provided that are displayed simultaneously. In the embodiment illustrated in FIG. 12A, two video channels are available for viewing in video window 82. This is shown in FIG. 14. The two video channels have corresponding channel icons in video channel bar 84. The channel number designations for these channel icons may be arbitrarily chosen, or the channel number designation may be chosen based on some sort of relationship to the content of the video or the broadcaster. A user may move a highlight region among the channel icons in channel bar 84. A user may choose to view a particular video channel by pressing an enter key on the remote control when the highlight region is over the channel icon corresponding to the channel that is desired to be viewed. Video window 82 may display designated video channel 1 as the default upon tuning to the Business News Channel. Switching to designated video channel 2 would involve selecting video channel 2 icon 86. As the user moves the highlight region among the video channel icons in video channel bar 84, when the highlight region is on a video channel that does not correspond to the current video feed being shown, a preview pane 85 may be provided to display a preview image, textual information, or video corresponding to the channel represented by the highlighted video channel icon.

Update window 92 may be similarly implemented. That is, update channel icon bar 94 may be used to display update channel icons that correspond to the various feeds providing text/graphic updates. As a viewer moves a highlight region among the update channel icons, a preview pane may be provided that may display a preview image, preview textual information, or preview video corresponding to the update channel icon currently highlighted.

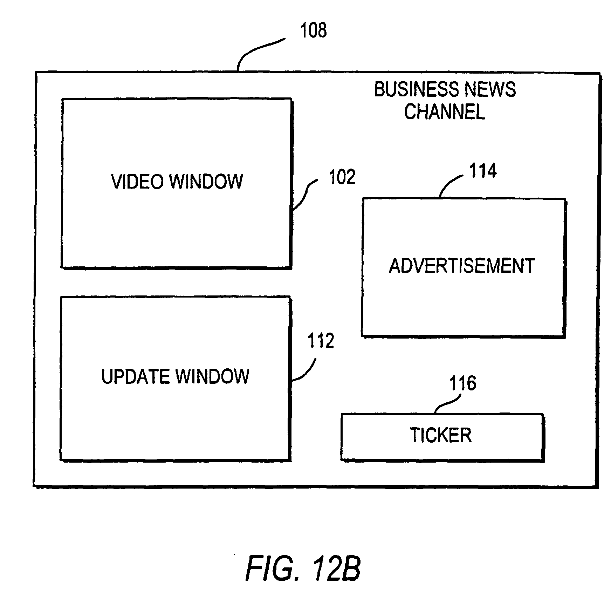

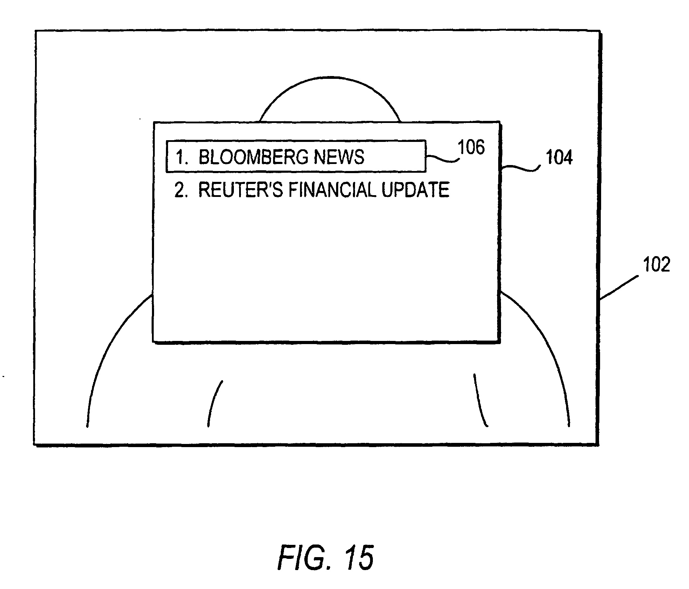

In an alternate embodiment, instead of having channel icons, the user may simply select a window and have a listing of feeds to choose from to display in the corresponding window. This is illustrated in FIG. 12B. The only visual difference between FIG. 12A and FIG. 12B is that there are no channel icons in FIG. 12B. Video window 102 may display a default video feed upon activation of the Business News Channel. The user may select video window 102 using arrow keys and an enter key on the remote control. This may cause overlay 104 to appear as shown in FIG. 15. Overlay 104 displays a listing of available video feeds that may be displayed over video window 102. Each listing may be accessed by moving a highlight region 106 over it. This may be accomplished through the use of arrow keys on the remote control. Once the highlight region 106 is over the desired video feed, the user may press an enter key on the remote control. This may activate the display of the selected video stream in video window 102.

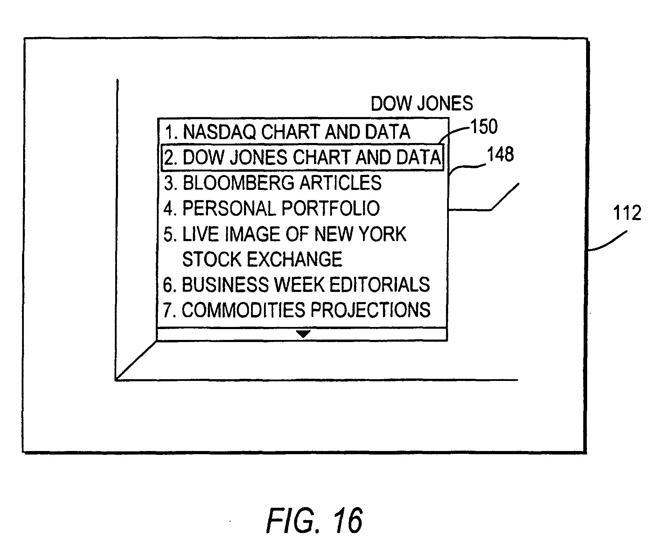

Update window 112 may be similarly implemented. The user may select update window 112 using arrow keys and an enter key on the remote control. This may cause overlay 148 to appear as shown in FIG. 16. Overlay 148 displays a listing of available text/graphic update feeds that may be displayed in update window 112. Each listing may be accessed by moving a highlight region 150 over it. Once the highlight region 150 is over the desired text/graphic update feed, the user may press an enter key on the remote control. This may activate the display of the selected text/graphic update feed in update window 112.

All viewable windows in the viewable display may be moved about the display area and placed anywhere in the display area. The movement may be accomplished through the use of arrow keys on the remote control or through a drag and drop routine using a mouse, or using a trackball integrated into the remote control, or using any other suitable means for selecting an element and moving it to another location on the screen. If desired, advertisements may be made to remain stationary or limited control may be given to the user to ensure that the advertisements always remain in view. This may include, for example, allowing the user to move the advertisements, but if an advertisement is placed in a way so that a portion of it lies outside the viewable area, the advertisement may automatically move itself into full view. In addition, the advertisement may always be on top of other windows. That is, if another element is placed on top of the advertisement, the advertisement may automatically be displayed as being on top of the window that was placed over the advertisement. These and other possible methods, as well as a combination of such methods that keep an advertisement in view, fulfills the main purpose of the advertisement's presence to inform the user. If desired, any such method or combination of such methods of displaying advertisements may be implemented.

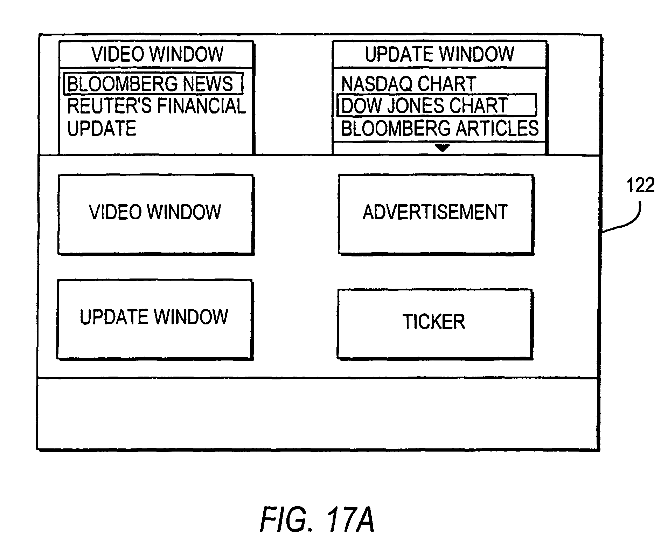

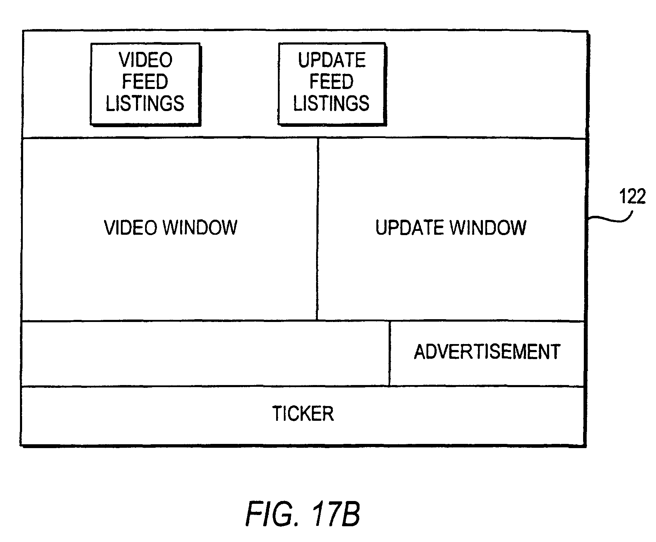

Possible window movements are illustrated in FIGS. 17A and 17B. FIG. 17A shows a typical Business News Channel display screen 122. FIG. 17B shows display screen 122 after the user has moved and resized several of the windows.

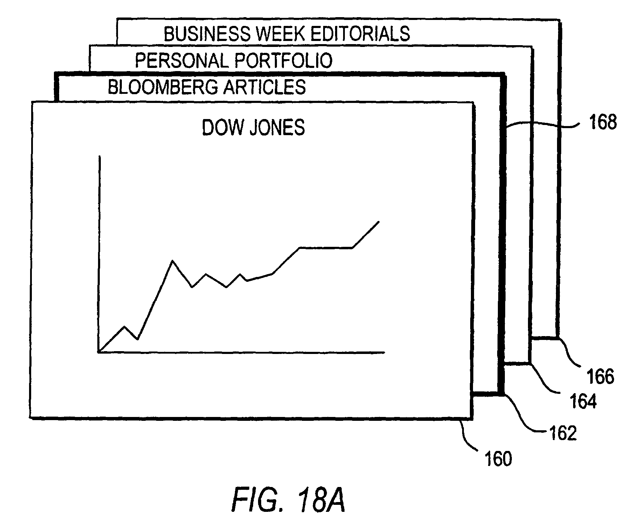

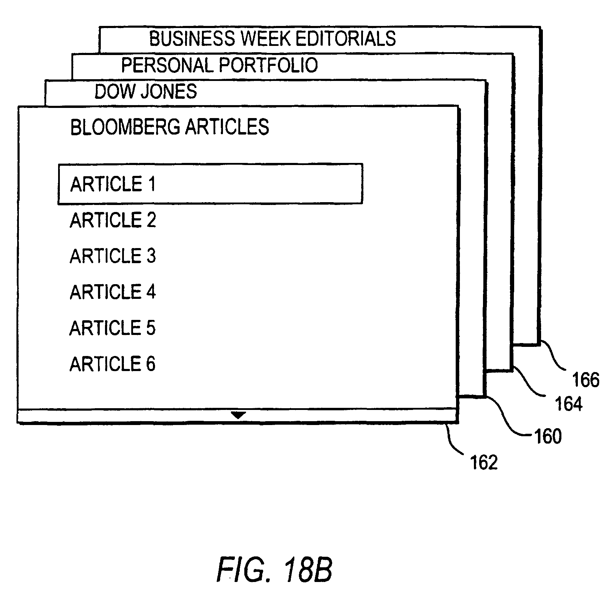

Cascading windows may be displayed, one partially covering the next, for each feed of a particular content category (i.e. video, text/graphic update, etc.). For example, the text/graphic update feeds of the Business News Channel broadcast may be represented as those shown in FIG. 18A. Windows 160, 162, 164, and 166 may be update windows that display text/graphic update feeds. One possible manner in which this feature may be implemented is to have the first window in the cascading series display its respective feed, while the others are simply empty windows that may display a title along a viewable edge. If a user wishes to view another feed, then a highlight region, such as highlight region 168 may be moved among the windows until it is over the desired feed. The user may then press an enter key on the remote control to activate the highlighted feed. This is shown in FIG. 18B. Update window 162 was selected by the user. As a result, the feed associated with update window 162 was activated as shown in FIG. 18B. The previously activated window 160 may switch places in the cascade series with the newly activated window 162. If desired, the previously activated window may move back one position in the series, or may move to the back of the sequence, or may be removed from the series. Alternatively, the windows making up the cascading structure that are partially visible may display the content that is visible in the visible portions of the partially visible windows. In the case of multiple video windows, this feature may require additional MPEG decoders in the set-top box. Any such implementation or any other suitable implementation may be used. If desired, user control settings may dictate which implementation is used.

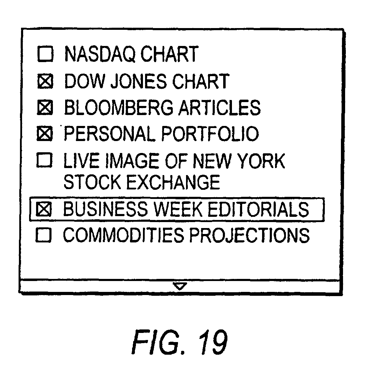

An initial display of the cascading series of windows may be based on a default setting. Otherwise, the user may choose which feeds to include in the cascade by, for example, highlighting any of the cascade windows and pressing a setup button on the remote control. This may bring up an overlay or a window in a black area or another cascade window that may display a listing of available feeds corresponding to the cascade series category. This listing is illustrated in FIG. 19. A user may select feeds to include in the cascade series by selecting check-boxes corresponding to individual feeds (or groups of feeds). A maximum number of feeds that may be selected may be implemented. This would alleviate the problem of having too many windows on the screen. If desired, however, such a limit need not exist.

The cascading structure of the feeds as shown in FIGs. 18A and 18B may remain constant. If desired, however, the windows may be separated from one another and moved about and placed anywhere on the display. If desired, each window may display its corresponding feed simultaneously.

A cascading structure may similarly be used for a collection of video feeds, a collection of tickers, or a collection of any suitable windows. If desired, such individual cascading structures need not contain only windows from the same category (e.g. video windows, tickers, etc.), but may contain a variety of different elements.

Channel icons, efficient use of black areas, overlaying listings windows, cascading feed windows, and other features presented thus far are merely illustrative ways in which a user may be presented with choice of feeds to activate. Any other suitable means may be used. This includes, but is not limited to, shrinking part of the display and inserting a content listing into the empty area, having a permanently displayed feed window with a passive or interactive content listing that may include sub-listings, or having a full-screen content listing appear when the user selects a particular item from the display screen, or by performing a particular physical act, such as pressing a listing button on a remote control. These and other embodiments may be used consistently or may be used in combination with one another.

Another embodiment of the rich content television program guide described by the present invention involves a digital music service. A music service provider, such as Music Television (MTV), may provide an analog carrier, which contains as it its main feed a traditional video music programming channel. Additional digital feeds may also be transmitted along this analog carrier. These feeds may include, but are not limited to, a title, track, and artist information feed for the currently playing song; album covers or other graphics that may be associated with the currently playing song; title, track, and artist information for a song playing on another channel (that may either be part of the same analog carrier on a different digital feed or on a completely different analog carrier); song lyrics; compact disc ordering information; and concert information. Any combination of these or other suitable feeds may be implemented in accordance with the present invention.

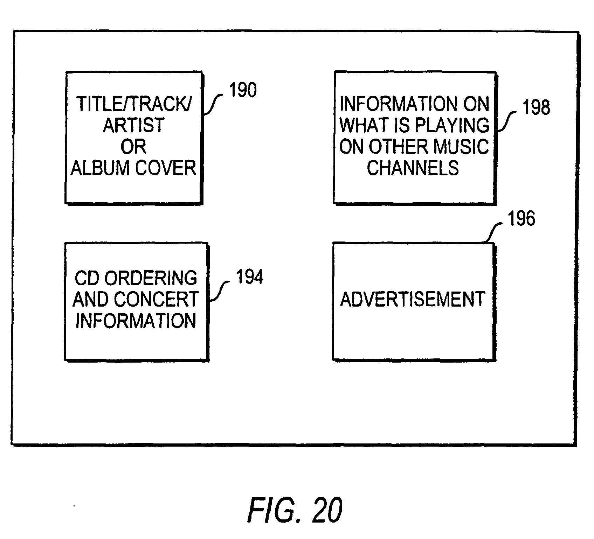

FIG. 20 is an illustration of a default layout for a digital music service channel. Text/graphic update window 190 may display a title, track, and artist information, any subset of such information or any combination of such information with other suitable information such as date of album release, etc. Another text/graphic update window 194 may be used to display compact disc ordering information and concert information. Text/graphic update window 198 may be provided to inform the user of content currently available on other music oriented feeds. Advertisement window 196 may also be displayed. These elements are merely illustrative. If desired any other suitable elements and arrangements may be implemented. These additional features and arrangements may be available to the user through a set-up routine. All of these elements may be received from the analog carrier that is currently tuned to or some of these elements may be received from another analog carrier.

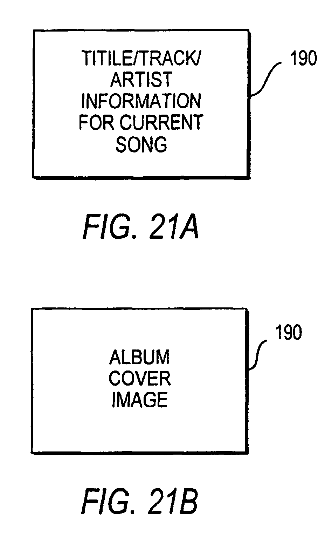

During the first few seconds (or any other desired length of time) that a song first begins to play, text/graphic update window 190 may display the title, track, and artist information for the current song as shown in FIG. 21A. After this time has elapsed, an image of the album cover or another suitable image may be displayed in text/graphic update window 190 as shown in FIG. 21B. Two separate feeds, sharing a common display window may be a method used in providing such a feature. If desired, a single feed may be formatted to provide such a feature as well. Such a feature is purely illustrative and does not need to be included as part of the present invention. If desired, the album cover image may be displayed in a separate window.

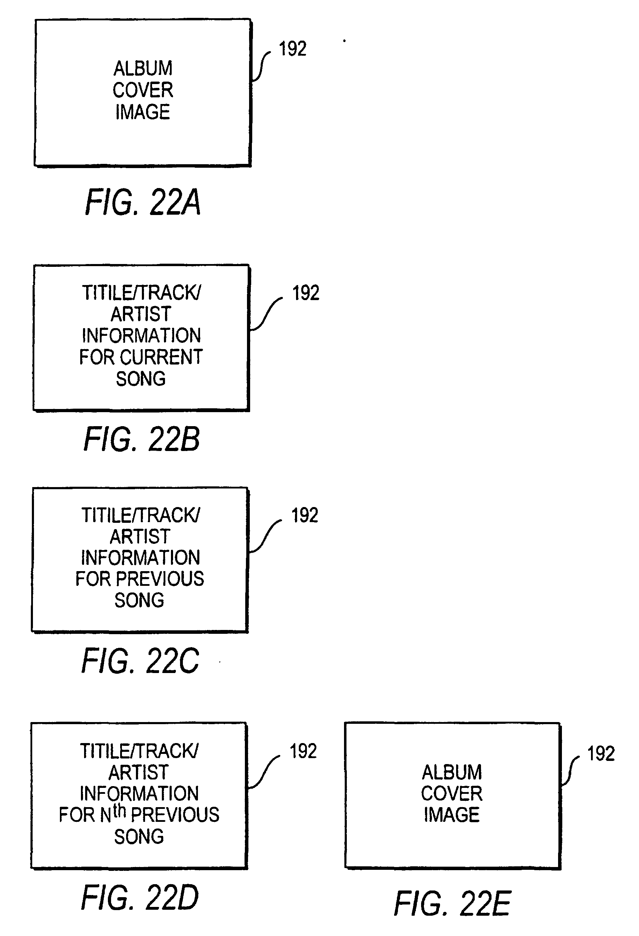

If desired, the user may toggle between the image of the album cover of the current song, the title, track, and artist information for the current song, and title, track, and artist information for a predetermined number of previous songs. This may be done in a new separate window in the display screen or may be done in any of the currently viewable text/graphic update windows such as window 190. FIG. 22A illustrates the initial view of the toggle process with the update window 192 displaying the album cover image. If the user performs a toggle command, the contents of window 192 may change to that shown in FIG. 22B, which shows the title, track, and artist information for the current song. If the user performs another toggle command, the contents of window 192 may change to that shown in FIG. 22C, which shows the title, track, and artist information for the previous song. After the toggle command is performed N-1 more times by the user, the contents of window 192 may change to that shown in FIG. 22D, which shows the title, track, and artist information for the Nth previous song. If the user performs the command again, then the content may loop back to the beginning as illustrated in FIG. 22E, which shows window 192 displaying the album cover image of the current song. If desired, a forward toggle command and a reverse toggle command may be provided to allow the user to toggle the content in the forward direction and in the backward direction. This is an illustrative feature of the present invention. If desired, other content may be displayed in the toggling sequence. If desired, update window 192 may be selected by the user at any time to provide additional information (e.g. album cover, ordering information, etc.) without the need to toggle, such as through the use of a scrollable list or any other suitable method.

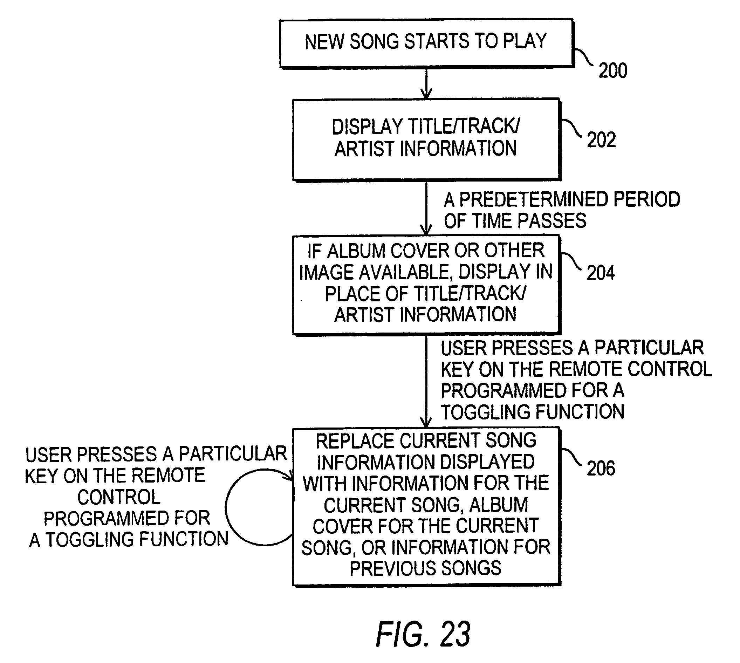

The flow chart of FIG. 23 summarizes this process. When a new song starts playing at step 200, the title, track, and artist information for that song may be displayed to the user in a text/graphic update window at step 202. After a predetermined period of time passes, the album cover image or any other image related to the current song, or, if desired, not related to the current song, may be displayed in place of the title, track, and artist information. At this point, anytime the user activates a predefined toggling command, the contents of the update window may be replaced with other content as was illustrated in FIGs. 22A-22E.

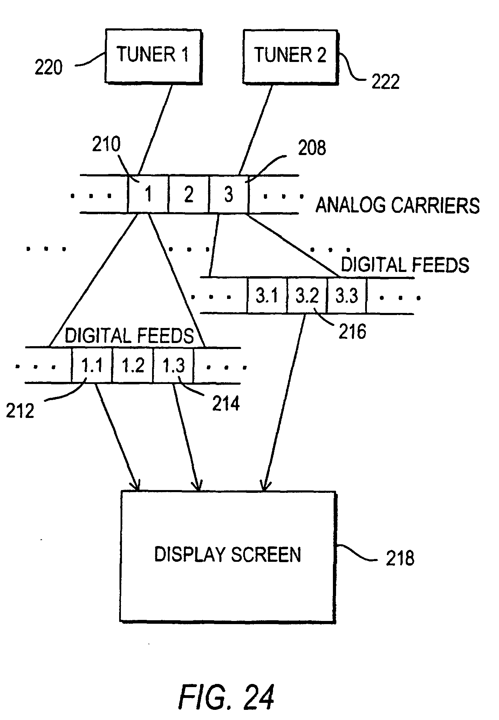

The content of each window in the display screen may be retrieved from a dedicated feed or may be retrieved from a combination of different feeds. If desired, the content may be retrieved only from the current analog carrier tuned to. If desired, content may be retrieved from a plurality of feeds that are interspersed among a plurality of analog carriers. This may require additional tuners in the set-top box since each tuner can tune to only one broadcast channel at a time. This concept is more generally illustrated in FIG. 24. Analog carrier 210 and analog carrier 208 each carry a set of digital television feeds. Digital television feed 212 and digital television feed 214 of analog carrier 210 may be simultaneously displayed with digital feed 216 of analog carrier 208 on display screen 218. This may require one tuner 220 to tune to analog carrier 210 and a separate tuner 222 to tune to analog carrier 208. If desired, additional analog carriers' digital feeds may be added to display screen 218 by adding more tuners. If desired, a time-multiplexing operation may be implemented, whereby one tuner, or a relatively small number of tuners, may be switched between different analog carriers (preferably, at a high speed), allowing the retrieval of pieces of data from each analog carrier at the time a tuner is tuned to each particular analog carrier. With increased switching speeds, this implementation may simulate a system that uses a relatively large number of tuners.

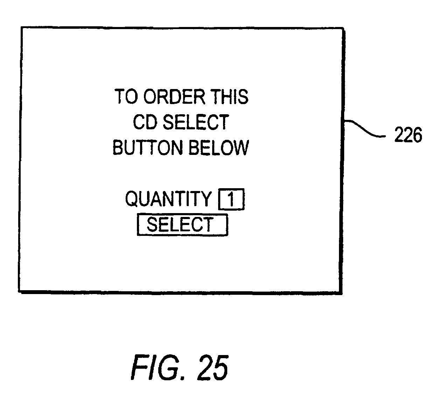

Text/graphic update window 194 of FIG. 20 may display compact disc ordering information, concert information, and concert ticket ordering information. If a song is playing, the user may select update window 194 to purchase the compact disc in which the current song may be found. If desired, the user may be allowed to purchase the compact disc in which the previous song may be found. Upon selecting update window 194, a window such as window 226 of FIG. 25 may be displayed. Window 226 may be an overlay, a separate window in a black area, window 194, etc. Any required purchase information, such as quantity, may be entered by the user. If desired, other information such as tape/CD format, method of shipment, shipping address, etc. may be asked. If desired, default information may be entered based on prior patterns of purchases for that user. Once this information is entered, and the user confirms the information (e.g. by pressing enter on the remote control), credit card information saved in memory either in the set-top box or at a remote location accessible from the set-top box may be accessed to process the order.

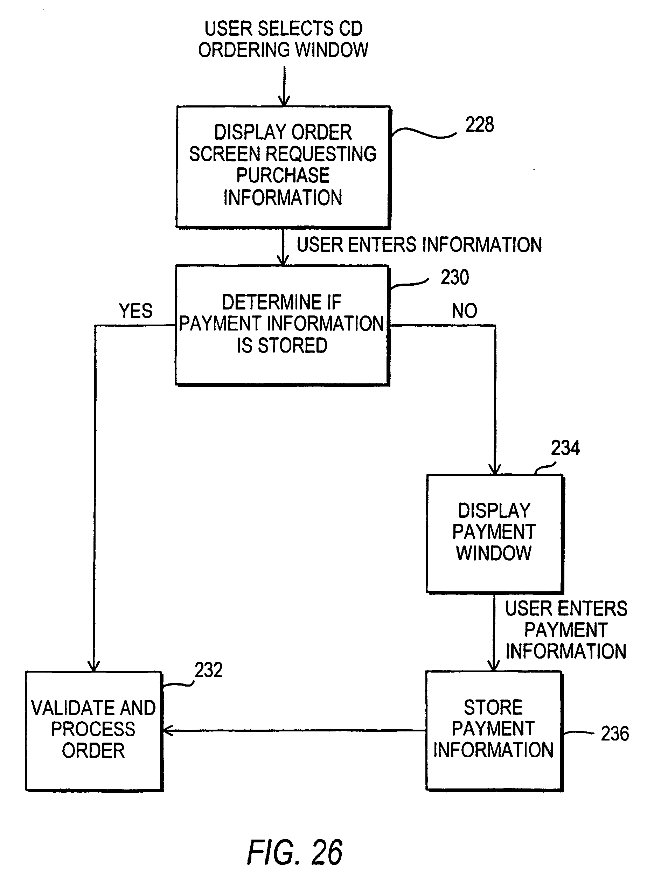

FIG. 26 is a flow chart that illustrates this process. After the user selects the CD ordering information update window 194, the window of FIG. 25 may be displayed at step 228 asking for additional purchase information. After the user enters the information, it may be determined if payment information is stored locally (in the set-top box) at step 230, or if desired, it may be determined if payment information is stored remotely. If payment information is found and validated, perhaps through a pin the user must enter, the order may be processed and shipped at step 232. If payment information is not found or not validated, then payment information may be requested and validated at step 234. Once correct payment information has been entered and validated, the system may store it locally, remotely or both for future use at step 236. The current order may then be processed and shipped at step 232.

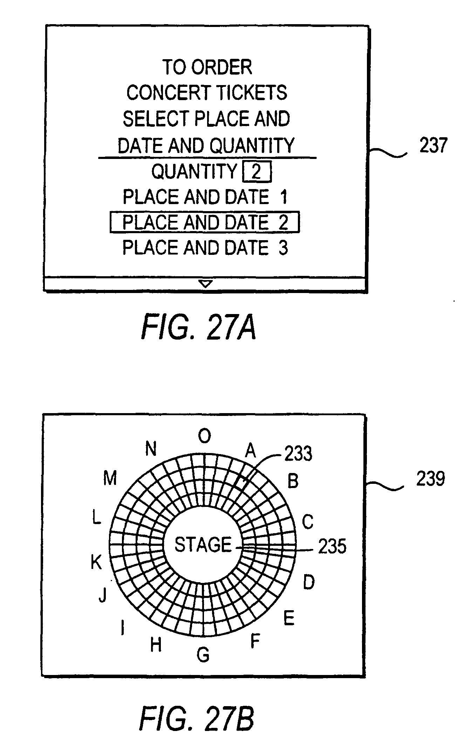

Concert tickets may also be ordered by selecting update window 194 of FIG. 20. For example, update window 237 of FIG. 27A may be displayed after the user selected update window 194. Window 237 may be an overlay, a separate window in a black area, window 194, etc. The user may be prompted to provide information such as the desired date and location of the concert and the number of tickets the user wishes to purchase. The user may also be given the opportunity to choose a particular seat or particular seats for which to purchase tickets. Update window 239 of FIG. 27B illustrates a selectable layout image 235 of a concert hall or arena, or any other forum in which a concert may be held. The user may select a seat 233. Seats that are taken may not be selectable or may be somehow distinguishable from those seats that are available, such as by a different color.

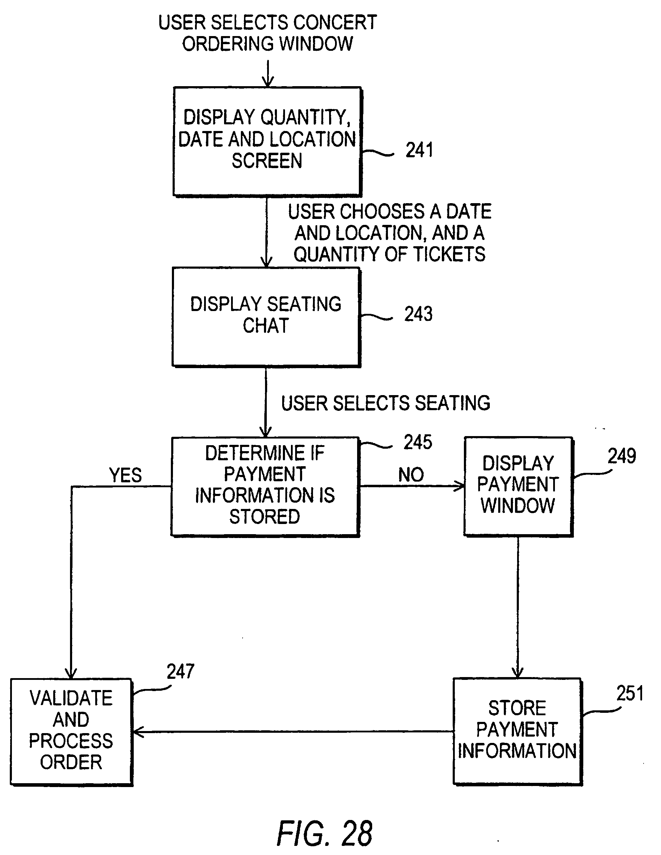

FIG. 28 is a flow chart that illustrates this process. After a user selects the concert information window, a window may be displayed at step 241 requesting further information about the particular tickets or concert-related items desired, such as the date and location of the concert (if tickets are being purchased), as well as the quantity of tickets. Once the user enters the information, a seating chart may be displayed at step 243 that may allow the user to interactively choose a seat or seats for which to purchase tickets. Once seats are chosen, it may be determined if payment information is stored locally (in the set-top box) at step 245, or if desired, it may be determined if payment information is stored remotely. If payment information is found and validated, perhaps through a pin the user must enter, the order may be processed and shipped at step 247. If payment information is not found or not validated, then payment information may be requested and validated at step 249. Once correct payment information had been entered and validated, the system may store it locally, store it remotely, or may store it both locally and remotely for future use at step 251. The current order may then be processed and shipped at step 247.

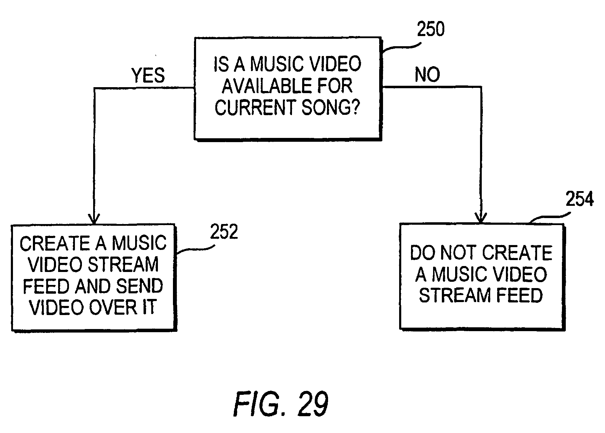

Another feature of the rich content television program guide described by the present invention is that digital feeds may be added on the fly. This provides an efficient mechanism in which bandwidth may be conserved in those instances where a particular digital feed is not always needed or in those instances where a particular digital feed is not always able to be provided. In the case of a digital music service, video stream feeds are not always required. This is because not all songs have associated music videos. In one embodiment, a digital video stream feed may always be provided, and in those cases when a music video is not available, an advertisement may be shown in place of a music video. However, if efficiency is an important issue, then the video stream feed should only be provided as needed. FIG. 29 illustrates this decision process. The system may first ask whether a music video is available for the current song being played at step 250. This may be accomplished, for example, by sending a control bit in the beginning of the audio feed for the song. A value of 1 may imply that a video is available, and a value of 0 may imply that a video is not available. These are arbitrary choices for values and their representations. Any other mapping of representations to values may be used. Another method of determining whether a video is available is by using a client-server routine, whereby the set-top box requests information from the headend in order to determine whether a particular song has an associated music video. If desired, any other suitable arrangement may be used to determine whether a music video is available. If it is determined that a music video is available, then at step 252 a video stream may be created on the fly and may be transmitted to the user. If, however, it was found that there is no available music video, then at step 254 it may be decided not to create a video stream feed for a music video.

If it is determined that a music video is available for the current song, then the music video may automatically begin playing in a new video window. If desired, the user may set a default action for what is to be done when a video is available. Perhaps the user wishes to be notified and prompted to have a new window opened. Any such suitable arrangement may be provided.

If desired, a karaoke feature may be provided to the user. In this embodiment, those frequencies in the audio that carry human voices may be filtered out by an audio processor in the set-top box. In an alternate embodiment, the provider of the audio feed may transmit an audio signal that has had the required frequencies filtered out. In addition, lyrics for the current song may be provided to the user in a separate window or in one of the default windows, etc.

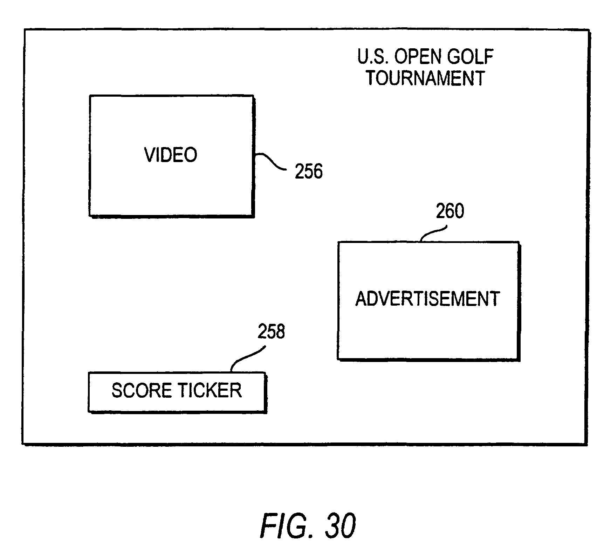

Another embodiment of the rich content television program guide described by the present invention relates to a golf tournament program. If desired, a broadcaster may provide one or more feeds that are related to a particular golf tournament. The event is not necessarily limited to a golf tournament, but may otherwise be any event. These feeds may all be specifically formatted for a particular event, and may therefore be made on the fly. FIG. 30 illustrates what may be a typical default display screen for a golf tournament. There may be a video window 256, a score ticker 258, and an advertisement 260. Additional features may be selected by the user by activating a set-up screen in accordance with the present invention.

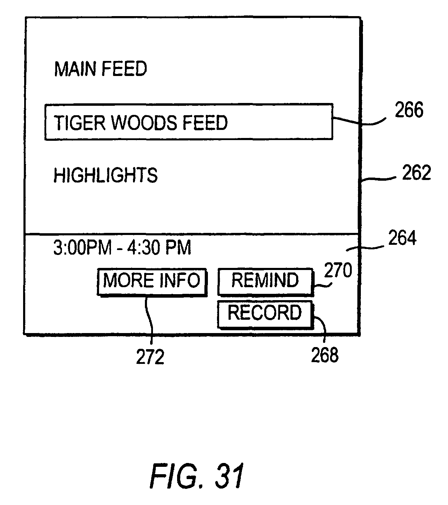

FIG. 31 is an illustration of a listings window 262, or a listings overlay, etc. that may be displayed to the user to allow for the selection of a video feed. Several video feeds may be provided. These video feeds do not necessarily need to be concurrently playing. Nor do they need to be the same duration. Rather, they may be program listings for video feeds that may be provided at particular times. A user may scroll through the listings using highlight region 266, while region 264 may concurrently display the programming information that may consist of the date and time of airing for the highlighted item. Additional features that may be provided include a remind option 270, a record option 268, and a more information option 272. The remind option 270 may allow a system event to occur just before the highlighted feed is about to begin, reminding the user that the feed will be beginning at that particular time. The record option 268 may allow the user to program a recording of the highlighted feed. The more information option 272 may display more information about the highlighted feed, such as content-based information, a historical perspective of the event, etc. This is just an illustrative list of features. Other suitable features may be used in addition to, in place of, or in combination with those mentioned.

If there is more than one feed that will be transmitted at the same time at any point, then a second video window may be displayed at the time the second feed begins, and a third video may be displayed at the time the third feed begins, etc. An additional MPEG decoder may be used for each additional concurrent video feed that is to be displayed.

A ticker 258 may be provided that displays scores. This may be a configurable ticker that the user may set up to display scores for certain players, scores of all players for one or more particular holes, scores for certain players for one or more particular holes, or any other suitable arrangement may be used.

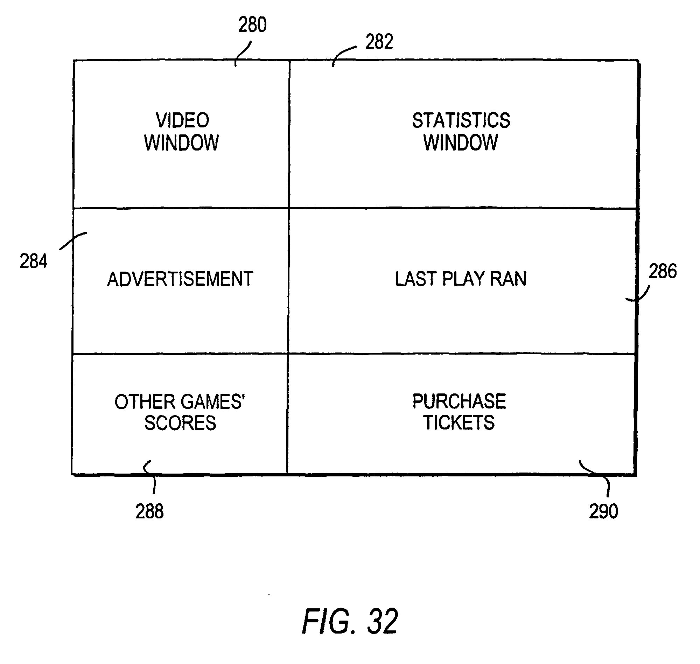

Another embodiment of the rich content television program guide described by the present invention relates to providing content having to do with a football program. FIG. 32 illustrates what may be a typical default layout of a display screen for the current embodiment.

A video window 280 may be displayed which may show the main feed of the particular football game being broadcast. Last play ran window 286 may be used to display a re-play of the last play. If desired, the user may select the last play ran window 286 which may result in a selection of plays that have occurred up to that point in the game being presented to the user. The user may choose any of the previous plays to be displayed in the last play ran window 286. This is only an illustrative use of the last play ran window 286. Any other suitable use of this feature may be used.

Statistics window 282 may be used to display statistics about a particular player. For example, as the commentators of the football game are discussing a particular player (e.g., in the audio portion of the video feed being displayed in video window 280), the statistics for that player may be displayed, on the fly, in statistics window 282. These statistics may include anything ranging from career statistics to the statistics for the particular game currently being broadcast. If desired, statistics window 282 may be interactive, whereby the user may select which statistics are to be displayed from a menu of available statistics.

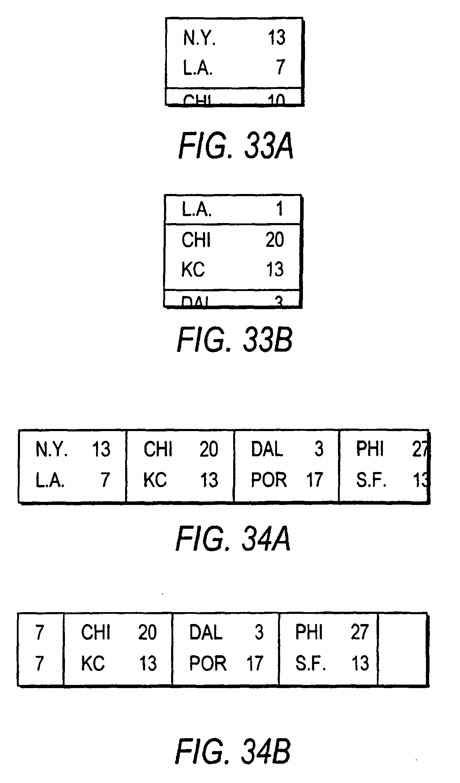

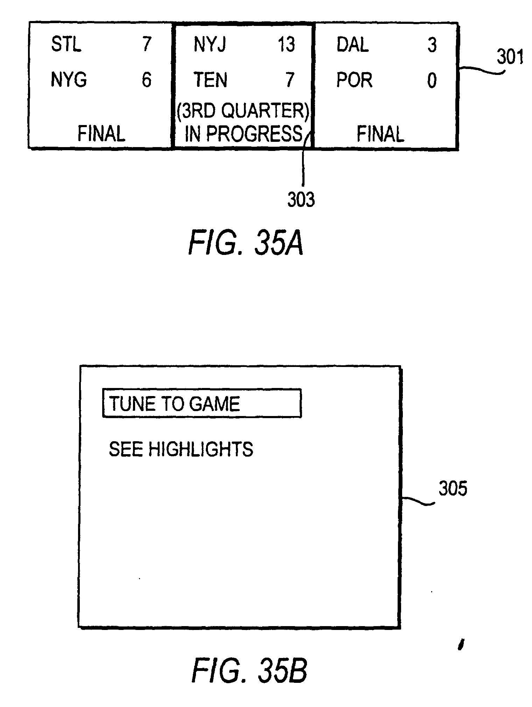

A window 288 that displays the scores of other games may be displayed. This may be a text window that is updated periodically. If desired, a ticker may be used. If window 288 is a ticker, then scores for games currently being played or games that have already been played may scroll along the ticker. The scrolling may be in any direction. For example, FIGs. 33A and 33B illustrate the case where scores scroll vertically from the bottom up. FIG. 33A is an arbitrary display of the ticker at any point in time. A little while later (such as on the order of a second), the ticker may look something like the display illustrated in FIG. 33B. Alternatively, FIGs. 34A and 34B illustrate a ticker that scrolls from right to left. FIG. 34A is an arbitrary display of the ticker at any point in time. A little while later (such as on the order of a second), the ticker may look something like the display illustrated in FIG. 34B. If desired, the ticker may scroll in any other suitable fashion such as diagonally or from top to bottom, etc. The ticker may be controlled by the user in terms of allowing the user to stop the ticker, allowing the user to change the direction the in which the ticker is scrolling, or allowing the user to perform any other suitable action on the ticker. If desired, the user may select an item displayed in the ticker in order to activate a predefined event. If desired, the user may be presented with a choice of events upon selecting the item. For example, football score ticker 301 of FIG. 35A may display a particular listing 303, which the user may select and which may, in turn, cause window 305 of FIG. 35B to appear allowing the user to select the event desired. If the game is still in progress, the user may tune to the game, or the user may select any other suitable event. The ticker feature of the present invention is further explored in commonly assigned U.S. Patent Application 09/229,047 (Edward B. Knudson, et al.).

A window 290 may present the user with an option to purchase tickets for future football games. This may be done in accordance with the present invention.

An advertisement window 284 may also be displayed in accordance with the present invention.

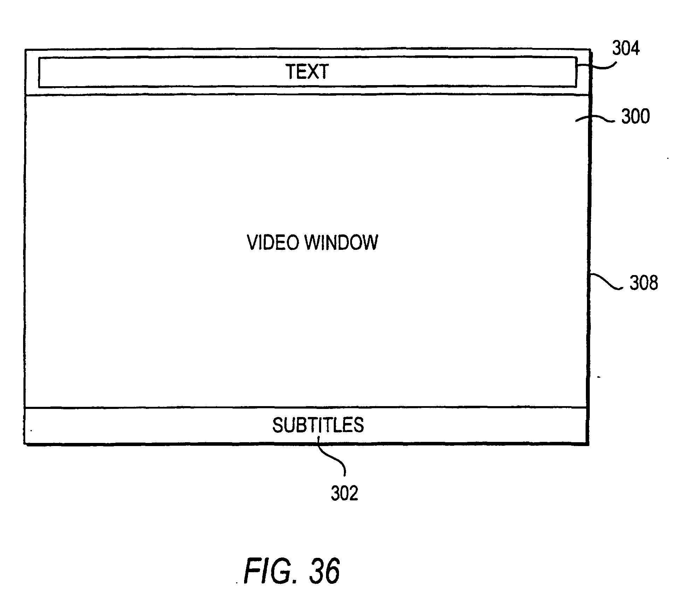

Another embodiment of the rich content television program guide described by the present invention may relate to the display of a movie. A typical default layout of a main screen for this embodiment may look something like that illustrated in FIG. 36. FIG. 36 contains a display screen 308 that may display a video window 300, a text update window 304, and a subtitle 302. Text update window 304 may be used to display reviewer comments, trivia, notes about the movie, etc. If desired, text update window 304 may be replaced with a ticker that may scroll through the same text as text update window 304 displays as well as any other suitable information provided either real-time or stored. If provided by the current broadcast, subtitle 302 may be provided as a default if the current film being viewed is foreign or if the user typically views films or programs with subtitles in a particular language.

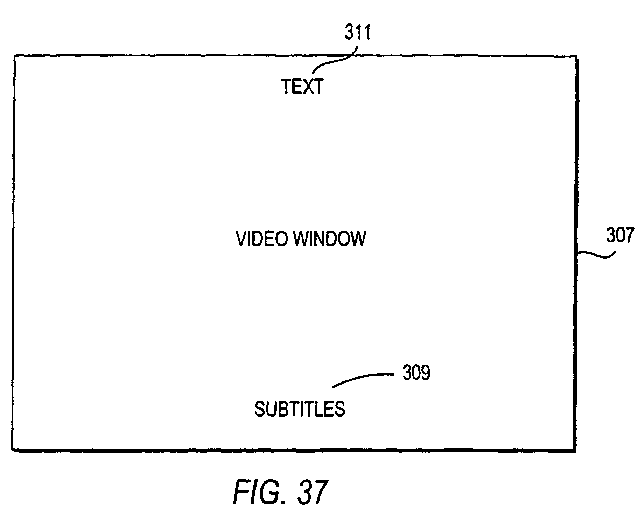

If the user wishes to view a movie using the entire display screen area, then subtitles and text information may be displayed as overlays as illustrated in FIG. 37. Text 311 and subtitle 309 may be displayed over the video window which may display programming that takes up all of display screen 307. If desired, overlaying the programming with text, or overlaying the programming with any other desired content, may be done even if the programming does not take up the entire display.

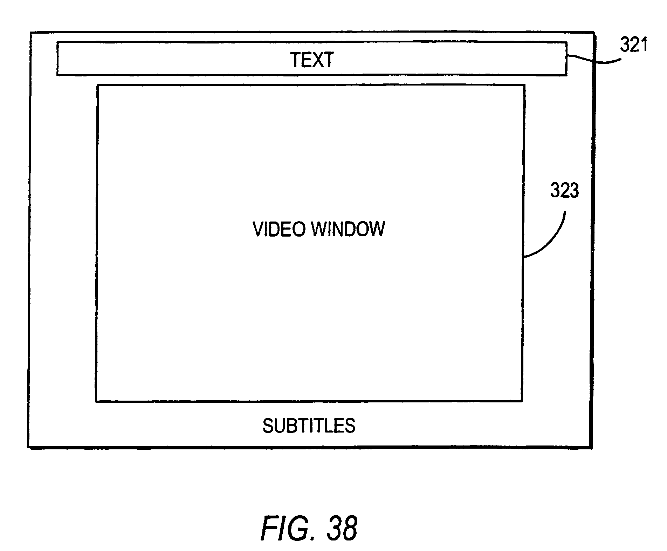

If the film being viewed in video window 300 is being broadcast in both a wide-screen version and a normal aspect ratio version, then the ratio that the user most often views (taking into account which type of movie is most often viewed with which type of ratio) may be used to determine which of the aspect ratios to display as the default. The user may also select which version to view by selecting a menu choice in a set-up window that may be provided by selecting video window 300. For instance, the screen shown in FIG. 38 may be displayed if the standard (4:3) aspect ratio feed is provided and the user selects it or if the standard aspect ratio is the default ratio. All of the surrounding areas not being used by text window 321 or video window 323 may be black areas and may be used in accordance with the present invention. That is, if desired, menus, additional digital television feeds, program listings, etc. may be displayed in the black areas.

If desired, the user may be allowed to resize the video window to whatever size the user desires. The user may be able to resize the video window using any one of several methods. For example, a wireless trackball may be used to select a window and then drag a border of the window to the desired area to be enclosed by the selected window. Alternatively, a user may select a window using arrow keys on a remote control and press a select key that will provide a set-up menu for the selected window. The menu may provide a resizing option which may require the user to use the arrow keys to input how much bigger or smaller to make the window. Or, if desired, the user may be prompted to enter a numerical value (perhaps in centimeters) that may serve as the dimensions of the resized window. Any such suitable method, or a combination of such methods, may be used to resize a video window. This is, of course, purely illustrative. For example, any window may be allowed to be resized by the user (with the exception of advertisement windows) -- not only video windows. In addition, any suitable means of interfacing a resizing operation may be used.

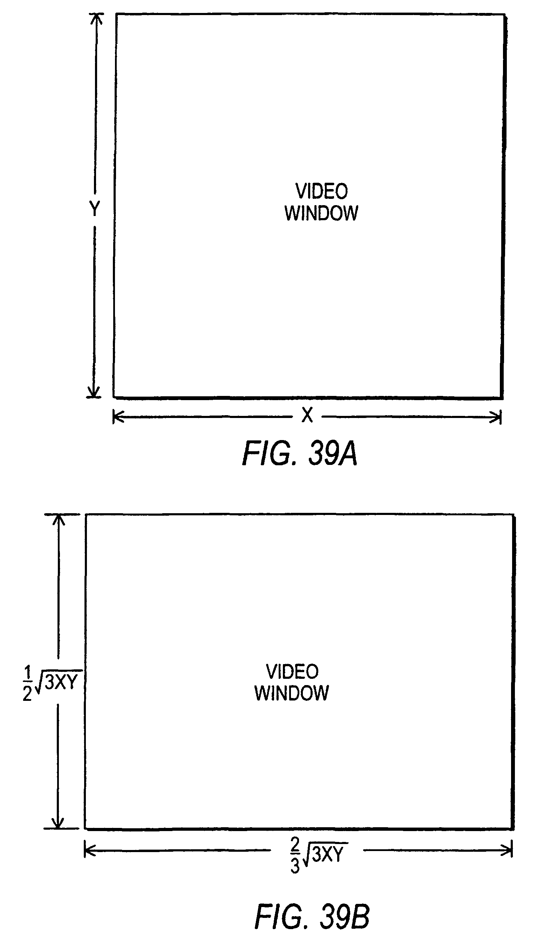

In the case where only one aspect ratio version of a film is provided by the broadcaster, the user may still be able to resize the video window to another ratio. For example, if a movie is only broadcast in standard aspect ratio, the user may choose to resize the window to a wide-screen ratio. A menu choice may be presented that may allow the user to resize the video to a pre-set size. For example, the pre-set size of a movie may be either standard aspect ratio, wide-screen ratio, or any other suitable ratio for viewing a movie. When the user selects one of these pre-set sizes, the video window may be automatically resized to the desired size. If desired, this feature may be generalized so that any sized window may be resized to a pre-set size. For example, FIG. 39A shows a video window that may have any arbitrary dimensions (i.e. x and y). The user may select an option to automatically resize this window to, for example, a standard aspect ratio. After resizing, the video window may look like the video window shown in FIG. 39B with the dimensions having been changed to conform to the standard aspect ratio of 4:3. In the illustrated example, the areas of both windows are the same. The dimensions of the window in FIG. 39B show that the area is the same as the window in FIG. 39A (i.e. area = xy) and the aspect ratio of the resized window is 4:3, while the aspect ratio of FIG. 39A may be any arbitrary ratio x:y. This may help to keep a consistency in the amount of space taken up by the video window in the display. This is, of course, purely illustrative. If desired, other methods of automatically resizing windows may be used that may keep the area the same or that may not keep the area the same. If desired, any window (with the exception of advertisements) may be automatically resized to a pre-set ratio. If desired, a window may be resized both manually and automatically.

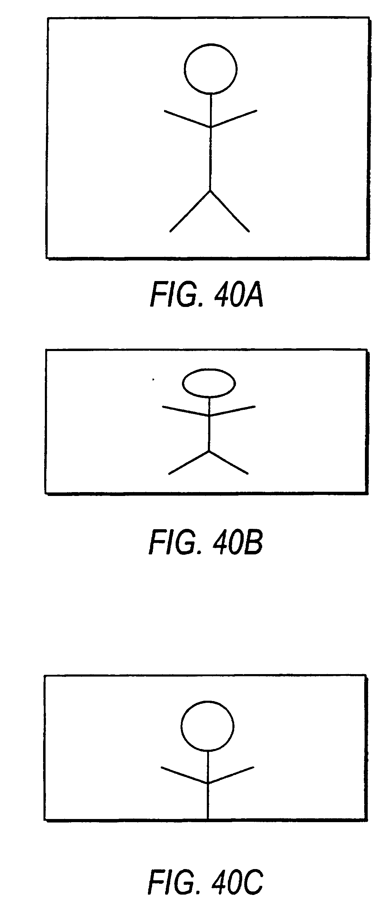

Resizing a window may result in the contents of the window being either resized in proportion to the resizing of the window, or resizing a window may cause the contents of the window to be cropped. If desired, only one or the other may be used, or a combination of both may be used, or the user may select which embodiment to use each time a window is resized. This feature is illustrated in FIGs. 40A-40C. FIG. 40A shows a window that may be in a default size. After the user resizes the window, and the rich content television program guide uses a scheme whereby the contents of windows are resized in proportion to the windows in which they reside, the contents displayed in FIG. 40A may become the contents displayed in FIG. 40B. As can be seen, by reducing the vertical dimension of the window, the vertical dimension of the content is reduced as well. If cropping is used when windows are resized, then by resizing the window shown in FIG. 40A, the window and its contents may be that shown in FIG. 40C. In this case, portions of the content that cannot fit in the resized window are cropped out of the display. If desired, any other suitable technique for dealing with the content of resized windows may be used.

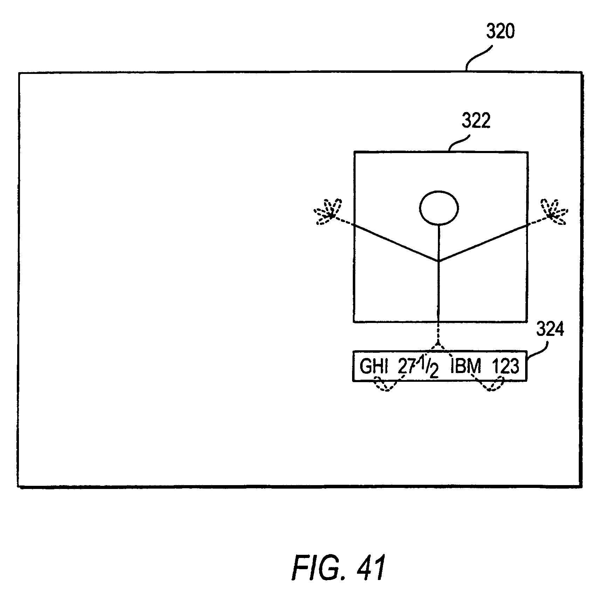

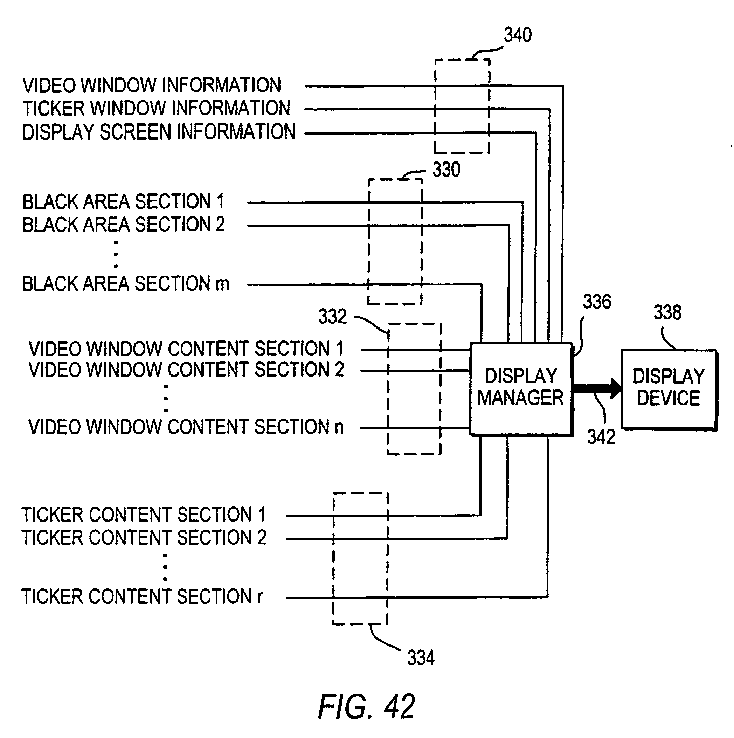

Cropping of images, and data in general, may be facilitated by any one of several methods or a combination of several methods. For example, even though data is being cropped, such as sections of images, all of the data may still be fed into the set-top box, but the data that is being cropped will simply be overlaid by other data. In the case of a video that is cropped, the entire video feed may still be used. However, in displaying the video, any images that fall outside the video window may be overlaid with whatever else is visible in the area that the extra video images take up outside the video window. This is illustrated in FIG. 41. Display screen 320 contains a window 322 that is displaying a cropped image. The dashed lines represent the sections of the image that are not visible and are thus cropped. The black areas and ticker 324 overlay the cropped area so that only the black areas and ticker 324 can be seen in that area outside window 322 where the content of window 322 is cropped. Such an implementation may require the use of a display management device that would manage which layers of content are visible (i.e. overlaying) and which layers of content are not visible (i.e. cropped). This process may be accomplished using the system illustrated by FIG. 42. Each element of the display screen (i.e. windows, black areas, etc.) may be broken up into unit sections. These unit sections may be on the order of a pixel or a square millimeter or any other suitable size. FIG. 42 illustrates how the elements of the display screen of FIG. 41 are combined on the display screen. Black areas sections 1 through m 330, video window content sections 1 through n 332, ticker sections 1 through r 334, and information on the video window, information on the ticker window, and information on the display screen 340 may be sent as input into the display manager 336. The display manager 336 may then determine if any of the content extends beyond the borders of the window in which it is to be confined. If cropping is selected, then the display manager may select only those sections of the content that fit in the windows the content belongs in (as well as window borders, etc.), represented by 342, to be displayed on the display device 338. The remaining content is "cropped."

Another feature of the rich content television program guide described by the present invention may allow an interactive application, that may be resident either locally on the set-top box or resident remotely at the headend's server or another remote location, to be instantiated at the conclusion of a movie. The application may allow the user to rate the movie, purchase a video of the movie, or purchase the video of a movie other users liked who rated the current movie similarly to the current user, or to do any other suitable action. This feature may be implemented by using a pop-up window feature whereby at the conclusion of a movie, a particular command may be sent to the set-top box to activate the interactive application which may, in turn, cause a window to appear on the display screen giving the user options for purchasing videos, etc. If desired, the video window in which the movie that has ended may be used to display the interface of the interactive application rather than opening another window. Alternatively, the user may be given the option of having a new window appear or having the video window used to display the application. Any such suitable implementation of presenting the interactive application may be used. This is purely an illustrative feature of the present invention. If desired, interactive applications, passive applications, or a combination of both may be activated at any desired time using any desired embodiment of the rich content television program guide described by the present invention. For example, a music service may provide an interactive application when a particular song begins playing, or even in the middle of a particular song, or if desired, at any random point in time, irrespective of the current song.

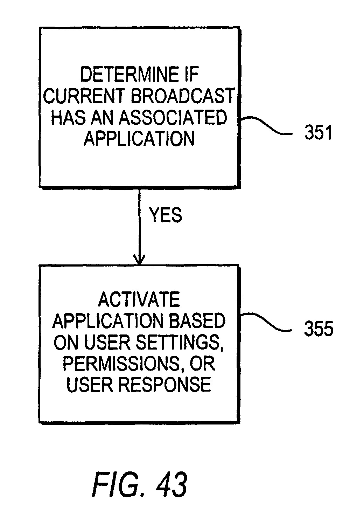

FIG. 43 is a general illustration of this feature. At step 351, it is determined whether a current digital television feed broadcast has an associated application. If there is an associated application, then based on user settings or other factors, or if desired, based on a prompt asking the user if he wishes for an application to be activated, the associated application is activated at step 355. If desired, permission based on parental controls or other suitable mechanisms may need to be granted to activate particular applications or other features of the rich content television program guide as it relates to the present invention.

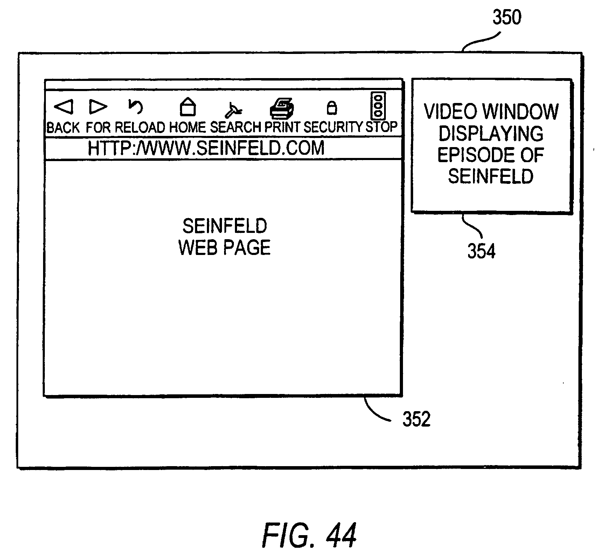

This feature may be used to provide a web browser that may be automatically activated and automatically commanded to display a web site that is related to the current program, information, song, etc. If desired, a web site that is not related to the current program may be displayed as well (such as a web site that serves as an advertisement). FIG. 44 shows a display screen 350 with video window 354 that is displaying an episode of Seinfeld, and a web browser window 352 that is displaying the Seinfeld homepage.

This feature of the rich content television program guide described by the present invention is further explored in commonly assigned U.S. Patent Application 09/346,134 (Michael D. Ellis, et al.).

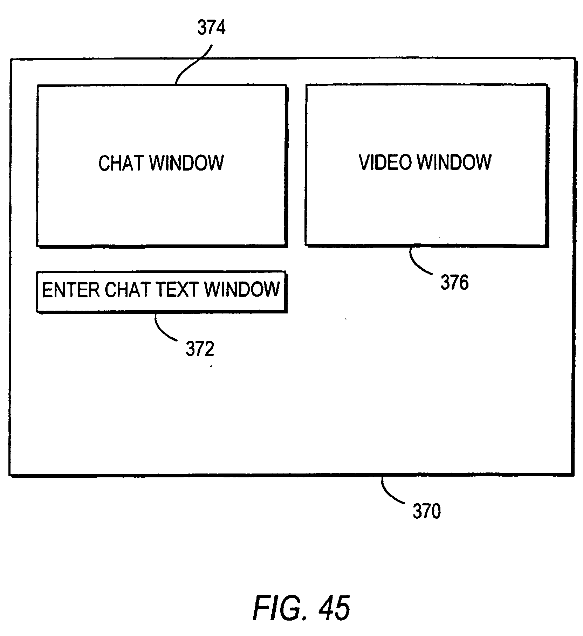

Another feature of the rich content television program guide described by the present invention may allow a user to chat with other users watching the same program, event, or advertisement. FIG. 45 shows a display screen 370 that displays a video window 376, a chat window 374, and an enter chat text window 372. This is purely an illustrative display screen. If desired any suitable combination or layout of elements in the display screen may be used. In the present illustration, video window 376 may display a television show such as Seinfeld. Chat window 374 may display conversations that have to do with Seinfeld. The user may use a wireless keyboard or any other suitable device to input characters into the enter chat text window 372. This feature of the present invention is further explored in commonly assigned U.S. Patent Application 09/356,270 (Toby Deweese, et al.).

## Claims

1. A method for having an interactive television program guide arrange television content retrieved from digital television feeds on user television equipment (40) having a display, wherein black areas (22, 24, 42, 44) are present either on the top and bottom, or the left and right of a displayed program that is broadcast in an aspect ratio that does not match the aspect ratio of the display of the user television equipment (40), **characterised by**:
placing interactive content in the black areas (22, 24, 42, 44);
allowing the user to navigate an indicator displayed on the display among the content;
providing the user with an opportunity to use the interactive television program guide to select particular content when the user has navigated the indicator to the particular content; and
performing an operation associated with the particular content when the user selects the particular content.

2. The method defined in claim 1, further **characterised by**:
using windows to contain the content, and wherein the windows are arranged in the black areas (22, 24, 42, 44).

3. The method defined in claim 1, wherein the content is at least one of the following: text, graphical images, video, audio, data, interactive content, program listings, enhanced broadcasts.

4. The method defined in claim 1, wherein the content is comprised of an interactive application.

5. The method defined in claim 4, wherein the interactive application is comprised of a web browser.

6. The method defined in claim 4, wherein the interactive application is comprised of a chat application.

7. The method defined in claim 1, further **characterised by**:
moving content that is in a part of the black areas (22, 24, 42, 44) to areas that are not part of the black areas (22, 24, 42, 44) causing the amount of space taken up by the black areas (22, 24, 42, 44) to increase by the amount of space taken up by the content that has been moved out of the black areas (22, 24, 42, 44).

8. The method defined in claim 1, further **characterised by**:
resizing content that is in the black areas (22, 24, 42, 44) causing the amount of space taken up by the black areas (22, 24, 42, 44) to change by an amount equivalent to the change in the amount of space the resized content takes up.

9. A system for having an interactive television program guide arrange television content retrieved from digital television feeds on user television equipment (40) having a display, wherein black areas (22, 24, 42, 44) are present either on the top and bottom, or the left and right of a displayed program that is broadcast in an aspect ratio that does not match the aspect ratio of the display of the user television equipment, comprising user television equipment (40) characterised to:
place interactive content in the black areas (22, 24, 42, 44);
allow the user to navigate an indicator displayed on the display among the content;
provide the user with an opportunity to use the interactive television program guide to select particular content when the user has navigated the indicator to the particular content; and
perform an operation associated with the particular content when the user selects the particular content.

10. The system defined in claim 9, further comprising user television equipment (40) characterised to:
use windows to contain the content, wherein the windows are arranged in the black areas (22, 24, 42, 44).

11. The system defined in claim 9, wherein the content is at least one of the following: text, graphical images, video, audio, data, interactive content, program listings, enhanced broadcasts.

12. The system defined in claim 9, wherein the content is comprised of an interactive application.

13. The system defined in claim 12, wherein the interactive application is comprised of a web browser.

14. The system defined in claim 12, wherein the interactive application is comprised of a chat application.

15. The system defined in claim 9, further comprising user television equipment (40) characterised to:
move content that is in a part of the black areas (22, 24, 42, 44) to areas that are not part of the black areas (22, 24, 42, 44) causing the amount of space taken up by the black areas (22, 24, 42, 44) to increase by the amount of space taken up by the content that has been moved out of the black areas (22, 24, 42, 44).

16. The system defined in claim 9, further comprising user television equipment (40) characterised to:
resize content that is in the black areas (22, 24, 42, 44) causing the amount of space taken up by the black areas (22, 24, 42, 44) to change by an amount equivalent to the change in the amount of space the resized content takes up.

## Patentansprüche

1. Verfahren zum Anbieten eines interaktiven Fernsehprogrammführers zum Arrangieren eines von Digital-Fernseheinspeisungen empfangenen Fernsehinhalts auf einer Benutzerfernseheinrichtung (40), die einen Bildschirm aufweist, wobei schwarze Bereiche (22, 24, 42, 44) entweder oben und unten oder rechts und links eines gezeigten Programms präsent sind, das in einem Seitenverhältnis übertragen wird, das nicht dem Seitenverhältnis des Bildschirms der Benutzerfernseheinrichtung (40) entspricht, **gekennzeichnet durch**:
Platzieren interaktiver Inhalte in den schwarzen Bereichen (22, 24, 42, 44);
Erlaubnis für den Benutzer, einen auf dem Bildschirm dargestellten Zeiger zwischen den Inhalten zu steuern;
Versehen des Benutzers mit einer Möglichkeit, den interaktiven Fernsehprogrammführer zu verwenden, um einen bestimmten Inhalt auszuwählen, falls der Benutzer den Zeiger zu dem bestimmten Inhalt gesteuert hat; und
Ausführen einer mit dem bestimmten Inhalt verknüpften Operation, falls der Benutzer den bestimmten Inhalt auswählt.

2. Verfahren gemäß Anspruch 1, weiterhin **gekennzeichnet durch**:
Verwenden von Fenstern zur Aufnahme des Inhalts, wobei die Fenster in den schwarzen Bereichen (22, 24, 42, 44) angeordnet sind.

3. Verfahren gemäß Anspruch 1, wobei der Inhalt Text, graphische Bilder, Video, Ton, Daten, interaktiven Inhalt, Programmauflistungen und/oder aufgewertete Übertragungen umfasst.

4. Verfahren gemäß Anspruch 1, wobei der Inhalt eine interaktive Anwendung umfasst.

5. Verfahren gemäß Anspruch 4, wobei die interaktive Anwendung einen Webbrowser umfasst.

6. Verfahren gemäß Anspruch 4, wobei die interaktive Anwendung eine Chatanwendung umfasst.

7. Verfahren gemäß Anspruch 1, weiterhin **gekennzeichnet durch**:
Bewegen des Inhalts, der in einem Teil der schwarzen Bereiche (22, 24, 42, 44) ist, in Bereiche, die nicht Teil der schwarzen Bereiche (22, 24, 42, 44) sind, wodurch die Menge des **durch** die schwarzen Bereiche (22, 24, 42, 44) beanspruchten Platzes um die Menge an Platz erhöht wird, der **durch** den aus den schwarzen Bereichen (22, 24, 42, 44) herausbewegten Inhalt beansprucht wird.

8. Verfahren gemäß Anspruch 1, weiterhin **gekennzeichnet durch**:
Anpassen der Größe des in den schwarzen Bereichen (22, 24, 42, 44) liegenden Inhalts, wodurch die Menge des **durch** die schwarzen Bereiche (22, 24, 42, 44) beanspruchten Platzes sich um eine Menge ändert, die der Veränderung der Menge des Platzes entspricht, die der in der Größe angepasste Inhalt beansprucht.

9. Vorrichtung zum Anbieten eines interaktiven Fernsehprogrammführers zum Arrangieren eines von Digitalfernseheinspeisungen empfangenen Fernsehinhalts auf einer Benutzerfernseheinrichtung (40), die einen Bildschirm aufweist, wobei schwarze Bereiche (22, 24, 42, 44) entweder oben und unten oder rechts und links eines gezeigten Programms präsent sind, das in einem Seitenverhältnis übertragenen wird, das nicht dem Seitenverhältnis des Bildschirms der Benutzerfernseheinrichtung entspricht, wobei die Vorrichtung eine Benutzerfernseheinrichtung (40) aufweist, die gekennzeichnet ist zum:
Platziere interaktive Inhalte in den schwarzen Bereichen (22, 24, 42, 44);
Erlaube dem Benutzer, einen auf dem Bildschirm dargestellten Zeiger zwischen den Inhalten zu steuern;
Versehe den Benutzer mit einer Möglichkeit, den interaktiven Fernsehprogrammführer zu verwenden, um einen bestimmten Inhalt auszuwählen, falls der Benutzer den Zeiger zu dem bestimmten Inhalt gesteuert hat; und
Führe eine mit dem bestimmten Inhalt verknüpfte Operation aus, falls der Benutzer den bestimmten Inhalt auswählt.

10. Vorrichtung gemäß Anspruch 9, die weiterhin die Benutzerfernseheinrichtung (40) umfasst, gekennzeichnet zum:
Verwende Fenster zur Aufnahme des Inhalts, wobei die Fenster in den schwarzen Bereichen (22, 24, 42, 44) angeordnet sind.

11. Vorrichtung gemäß Anspruch 9, wobei der Inhalt Text, graphische Bilder, Video, Ton, Daten, interaktiven Inhalt, Programmauflistungen und/oder aufgewertete Übertragungen umfasst.

12. Vorrichtung gemäß Anspruch 9, wobei der Inhalt eine interaktive Anwendung umfasst.

13. Vorrichtung gemäß Anspruch 12, wobei die interaktive Anwendung einen Webbrowser umfasst.

14. Vorrichtung gemäß Anspruch 12, wobei die interaktive Anwendung eine Chatanwendung umfasst.

15. Vorrichtung gemäß Anspruch 9, die weiterhin die Benutzerfernsehrichtung (40) umfasst, gekennzeichnet zum:
Bewege Inhalt, der in einem Teil der schwarzen Bereiche (22, 24, 42, 44) ist, zu Bereichen, die nicht Teil der schwarzen Bereiche (22, 24, 42, 44) sind, wodurch die Menge des durch die schwarzen Bereiche (22, 24, 42, 44) beanspruchten Platzes um die Menge an Platz erhöht wird, der durch den aus den schwarzen Bereichen (22, 24, 42, 44) herausbewegten Inhalt beansprucht wird.

16. Vorrichtung gemäß Anspruch 9, weiterhin umfassend die Benutzerfernseheinrichtung (40) gekennzeichnet zum:
Passe die Größe des Inhalts, der in den schwarzen Bereichen (22, 24, 42, 44) ist an, wodurch die Menge des durch die schwarzen Bereiche (22, 24, 42, 44) beanspruchten Platzes sich um eine Menge ändert, die gleich der Änderung der Menge des Platzes ist, der durch den größenangepassten Inhalt beansprucht wird.

## Revendications

1. Procédé permettant qu'un guide interactif de programmes de télévision organise du contenu télévisuel extrait d'alimentations télévisuelles numériques sur un équipement de télévision personnel (40) comportant un affichage dans lequel des zones noires (22, 24, 42, 44) sont présentes soit en haut et en bas, soit à gauche et à droite d'un programme affiché qui est diffusé suivant un format d'image qui ne correspond pas au format d'image de l'affichage de l'équipement de télévision personnel (40), **caractérisé par** :
le placement de contenu interactif dans les zones noires (22, 24, 42, 44) ;
la faculté pour l'utilisateur de faire naviguer à travers le contenu un indicateur affiché sur l'affichage ;
la possibilité pour l'utilisateur d'utiliser le guide interactif de programmes de télévision pour sélectionner un contenu particulier lorsque l'utilisateur a fait naviguer l'indicateur jusqu'au contenu particulier, et
l'exécution d'une opération associée au contenu particulier lorsque l'utilisateur sélectionne le contenu particulier.

2. Procédé suivant la revendication 1 **caractérisé en outre par** :
l'utilisation de fenêtres pour contenir le contenu, et dans lequel les fenêtres sont disposées dans les zones noires (22, 24, 42, 44).

3. Procédé suivant la revendication 1 dans lequel le contenu est au moins un des éléments du groupe suivant : du texte, des images graphiques, de la vidéo, de l'audio, des données, du contenu interactif, des listes de programmes, des télédiffusions améliorées.

4. Procédé suivant la revendication 1 dans lequel le contenu est composé d'une application interactive.

5. Procédé suivant la revendication 4 dans lequel l'application interactive est composée d'un navigateur web.

6. Procédé suivant la revendication 4 dans lequel l'application interactive est composée d'une application de bavardage.

7. Procédé suivant la revendication 1 **caractérisé en outre par** :
le déplacement de contenu qui se trouve dans une partie des zones noires (22, 24, 42, 44) vers des zones qui ne font pas partie des zones noires (22, 24, 42, 44) amenant la quantité d'espace occupé par les zones noires (22, 24, 42, 44) à augmenter de la quantité d'espace occupé par le contenu qui a été déplacé hors des zones noires (22, 24, 42, 44).

8. Procédé suivant la revendication 1 **caractérisé en outre par** :
le redimensionnement de contenu qui se trouve dans les zones noires (22, 24, 42, 44) amenant la quantité d'espace occupé par les zones noires (22, 24, 42, 44) à changer suivant une quantité équivalente au changement de quantité d'espace qu'occupe le contenu redimensionné.

9. Système permettant qu'un guide interactif de programmes de télévision organise du contenu télévisuel extrait d'alimentations télévisuelles numériques sur un équipement de télévision personnel (40) comportant un affichage dans lequel des zones noires (22, 24, 42, 44) sont présentes soit en haut et en bas, soit à gauche et à droite d'un programme affiché qui est diffusé suivant un format d'image qui ne correspond pas au format d'image de l'affichage de l'équipement de télévision personnel, comprenant un équipement de télévision personnel (40) **caractérisé par** :
le placement de contenu interactif dans les zones noires (22, 24, 42, 44) ;
la faculté pour l'utilisateur de faire naviguer à travers le contenu un indicateur affiché sur l'affichage ;
la possibilité pour l'utilisateur d'utiliser le guide interactif de programmes de télévision pour sélectionner un contenu particulier lorsque l'utilisateur a fait naviguer l'indicateur jusqu'au contenu particulier, et
l'exécution d'une opération associée au contenu particulier lorsque l'utilisateur sélectionne le contenu particulier.

10. Système suivant la revendication 9 comprenant en outre un équipement de télévision personnel (40) **caractérisé par** :
l'utilisation de fenêtres pour contenir le contenu, dans lequel les fenêtres sont disposées dans les zones noires (22, 24, 42, 44).

11. Système suivant la revendication 9 dans lequel le contenu est au moins un des éléments du groupe suivant : du texte, des images graphiques, de la vidéo, de l'audio, des données, du contenu interactif, des listes de programmes, des télédiffusions améliorées.

12. Système suivant la revendication 9 dans lequel le contenu est composé d'une application interactive.

13. Système suivant la revendication 12 dans lequel l'application interactive est composée d'un navigateur web.

14. Système suivant la revendication 12 dans lequel l'application interactive est composée d'une application de bavardage.

15. Système suivant la revendication 9 comprenant en outre un équipement de télévision personnel (40) **caractérisé par** :
le déplacement de contenu qui se trouve dans une partie des zones noires (22, 24, 42, 44) vers des zones qui ne font pas partie des zones noires (22, 24, 42, 44) amenant la quantité d'espace occupé par les zones noires (22, 24, 42, 44) à augmenter de la quantité d'espace occupé par le contenu qui a été déplacé hors des zones noires (22, 24, 42, 44).

16. Système suivant la revendication 9 comprenant en outre un équipement de télévision personnel (40) **caractérisé par** :
le redimensionnement de contenu qui se trouve dans les zones noires (22, 24, 42, 44) amenant la quantité d'espace occupé par les zones noires (22, 24, 42, 44) à changer suivant une quantité équivalente au changement de quantité d'espace qu'occupe le contenu redimensionné.
